(19) Europäisches Patentamt
European Patent Office
Office européen des brevets

(11) Publication number: **0 206 756 B1**

# (12) EUROPEAN PATENT SPECIFICATION

(45) Date of publication of patent specification: **15.02.95**

(51) Int. Cl.[6]: **C08F 10/00**, C08F 4/06

(21) Application number: **86304698.3**

(22) Date of filing: **18.06.86**

## (54) Living catalysts, complexes and polymers therefrom.

(30) Priority: **20.06.85 US 746835**

(43) Date of publication of application:
**30.12.86 Bulletin 86/52**

(45) Publication of the grant of the patent:
**15.02.95 Bulletin 95/07**

(84) Designated Contracting States:
**AT BE CH DE FR GB IT LI LU NL SE**

(56) References cited:
**EP-A- 0 124 782**
**DE-A- 2 633 745**
**US-A- 3 725 498**
**US-A- 3 833 678**
**US-A- 3 963 772**

(73) Proprietor: **The University of Akron**
**302 E. Buchtel Avenue**
**Akron**
**Ohio 44325 (US)**

(72) Inventor: **Kennedy, Joseph P.**
**510 St.Andrew Circle**
**Akron, OH 44313 (US)**
Inventor: **Faust, Rudolf**
**1515 Brittain Circle, No. 5**
**Akron, OH 44310 (US)**

(74) Representative: **Spall, Christopher John et al**
**BARKER, BRETTELL & DUNCAN**
**138 Hagley Road**
**Edgbaston**
**Birmingham B16 9PW (GB)**

**EP 0 206 756 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### TECHNICAL FIELD

This invention relates to a class of complexes, useful as living polymerization catalysts to produce polymers having specific end groups and especially polymers such as butyl rubber and related polymers. More particularly, this invention relates to complex compounds containing or incorporating at least one or a number of olefinic monomers but sufficient to give a range of molecular weights from the very low range of about 200, 500 or 10,000 to the extremely high range of 500,000 or a million and higher. Specifically, this invention provides a so-called living polymer preparation method that allows polymers to be made as homopolymers, random copolymers, to highly specialized block copolymers, or terpolymers, and the like.

### BACKGROUND ART

Truly living polymerization, i.e., truly terminationless and chain transferless polymerizations, are a most desirable objective of the synthetic polymer chemist. If the rates of both termination and chain transfer are zero, $R_t = R_{tr} = 0$, and the rate of initiation is larger than that of propagation $R_i > R_p$, polymer molecule weights are determined by the ratio [M]/[I] (i.e., monomer over initiator concentrations) and $\overline{M}_w/\overline{M}_n$ will be reasonably small. If $R_i$ is instantaneous and/or $R_i \gg R_p$, then $\overline{M}_w/\overline{M}_n \simeq 1.0$. Living polymerizations are not only of scientific interest, but also of great commercial consequence, and several industrial processes are based on living systems, e.g., cis-1,4-polybutadiene, triblock copolymers of styrene/butadiene/styrene, polytetrahydrofuran, but these are not carbocationic polymerization processes.

Although great efforts have been made to develop living carbocationic polymerizations, success remains rather limited. The only truly living carbocationic systems described to date are those achieved by Higashimura, Sawamoto, et al. involving the $HI/I_2$ initiator system and the highly cationically reactive monomers such as vinyl ethers, p-methoxy styrene and N-vinyl carbazole. Under certain well-defined experimental conditions, quasiliving carbocationic polymerizations approach those of truly living polymerizations but only under quite restrictive conditions, i.e., very low temperatures, continuous slow monomer addition (when the rate of monomer addition and that of monomers consumption are equal), and even then the rate of chain transfer is not exactly zero, but only approaches zero. Also, in quasiliving polymerizations, $R_t$ is not zero, but termination is reversible so that over a reasonably long time period termination appears to be absent, hence the term "quasiliving."

U.S. 3 963 771 of Takeshita teaches polymerisation at temperatures that would decompose the complex of the instant invention. Furthermore free radical generators are used and these do not produce living polymerisation systems. DE 2 633 745 polymerises olefins having 5 carbon atoms or more to produce polyolefin oils of high viscosity in the presence of aluminium powder and $AlX_3$ at 50 to 150 °C. Both the temperature concerned and the aluminium powder would destroy the complex of the Applicant's invention. The disclosure in DE 2 633 745 is different from the instant invention in both function and result. U.S. 3 725 498 teaches the use of a liquid complex in the present of excess $AlX_3$ (1.1 to 1.7 mols of $ALX_3$ per mol. of ester). For the complex to be catalytically useful it is made at a temperature preferably between 30 to 50 °C. These catalysts are used to polymerise olefins at temperatures between 0 and 100 °C. The resulting polymer is a mixture of dimer, trimer and lubricating oil. The variation in products indicates that the polymerisation mechanism includes proton abstraction leading to cross linking and that supernonnucleophilic counteranions are not present and the polymerisation system is not living.

### DISCLOSURE OF INVENTION

Recently, we have developed a series of new initiator systems that lead us to truly living polymerization systems for olefins such as isobutylene, copolymerization systems of an olefin such as isobutylene with a diolefin such as isoprene, and to new telechelic end reactive polymers of isobutylene or related olefins.

This invention concerns a new family of initiating systems, a new process for making polymers and a series of new products having specific end groups thereon.

The family of initiating systems is based on organic acids or esters in conjunction with a Lewis acid, preferably $BCl_3$, as illustrated by the following formulae:

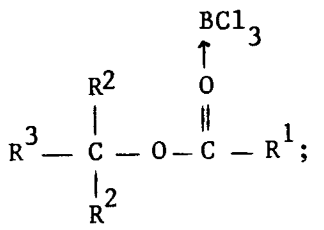

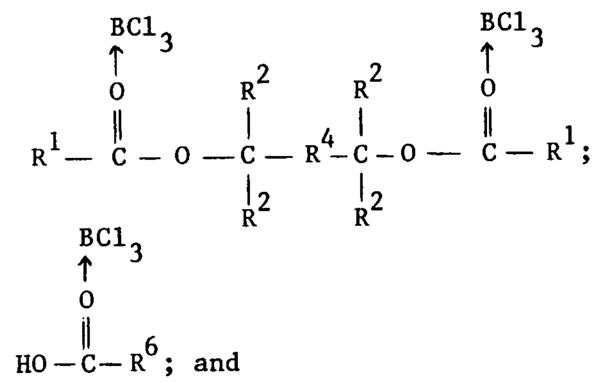

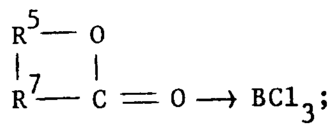

and

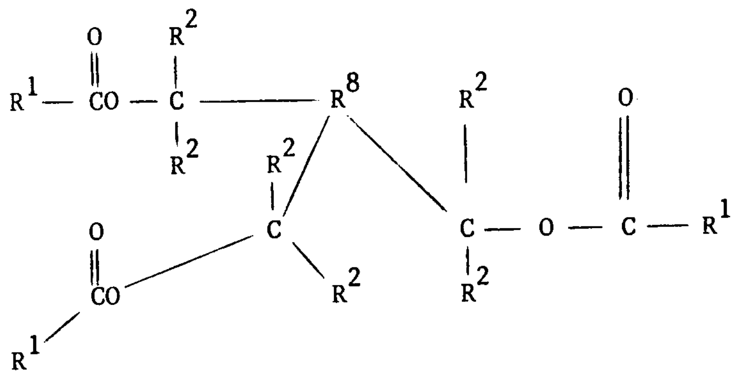

where $R^1$ in the above formula may be H, halogen, an organic moiety such as methyl and related alkyl, or aryl groups, preferably up to 14 to 20 carbon atoms, alkylene groups such as $-CH=CH_2$ and related lower alkylene groups, preferably 2 to 8 carbon atoms, and groups containing hetero atoms and related groups such as alkylene chloride, methylene to butylene alkoxy, preferably up to 14 to 20 carbon atoms;

$R^2$ may be H, methyl and related alkyl groups containing preferably from 1 to 14 to 20 carbon atoms, in general $R^2$ can be the same as $R^1$;

$R^3$ may be methyl, or related alkyls of preferably 2 to 20 carbon atoms or aryls such as phenyl, cycloalkyls, or vinyl or allyl groups or a $CH_2=$group, in general $R^3$ can be the same as $R^2$;

$R^4$ may be $-(CH_2)_x$, or other moiety such as $-CH_2-CH_2-$, acetylenic such as $-C\equiv C-$, or arylene such as

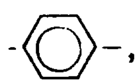

or ethylenic such as $-CH=CH-$ and related homologous groups; where x is 1 to about 20 and preferably 1 to 10 in value;

$R^5$ may be alkylenes such as $-CH_2-$, and substituted alkylenes such as

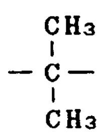

or other well known groups where H and methyl have been replaced to produce the related homologous series that yield many lactones having alkyl, aryl, alkaryl, arylalkyl and cycloalkyl groups substituted on the carbon in the lactone ring;

$R^6$ may be the same as $R^1$ but preferably limited to H or alkyls such as methyl or ethyl or aryl; and

$R^7$ is an alkylene group containing carbon atoms to complete the lactone ring over the range of 3 to 20 carbon atoms or more or an alkylene group having the hydrogen atoms on at least one of the carbon atoms substituted with other carbon atoms or customary carbon atom substituents;

$R^8$ may be a three valent organic moiety such as

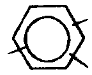 or 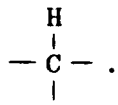

It should be appreciated that $R^2$ in the above formulae can be the same or different.

Specific embodiments of the invention are given in the claims.

## BEST MODE FOR CARRYING OUT THE INVENTION

The polymerization can be carried out at an appropriate temperature by contacting preferably in a liquid diluent the olefinic monomer or monomers, the organic acid or ester and $BCl_3$ or related Lewis acid. The diluents preferably are hydrocarbons such as n-butane, n-pentane, n-hexane, isopentane, neopentane, benzene, toluene, methylcyclohexane or chlorinated hydrocarbons such as $CH_2Cl_2$, $CH_3Cl$, $C_2H_5Cl$, chlorobenzene, ethylidene dichloride, propyl chloride, to name a few of the representative ones well known to the art. Mixed solvents can also be used.

As to the mixing sequence of the ingredients, they may be done without regard to sequence. For example, one can premix the organic ester and $BCl_3$ in a solvent and then add the monomer in a solvent, or premix the ester and the monomer in a solvent and then add the $BCl_3$ in a solvent. Generally, the polymerization starts upon the introduction of the last needed ingredient when the temperature is maintained below the decomposition temperature of the complex which generally is below minus 10°C but in some cases may be above 40°C. Bulk polymerization, i.e., in the absence of a solvent, can also be carried out.

The polymerization, generally, can be carried out continuously by mixing two streams of chemicals, ester and $BCl_3$ preferably mixed with monomer in appropriate solvents, or ester and monomer mixed with $BCl_3$ or related Lewis acid at a temperature below the decomposition temperature of the complex formed.

In a special embodiment, we also have discovered that the polymerization can be carried out above the decomposition temperature of the complex provided certain precautions are taken, to give savings in refrigeration costs and thus achieve economy in production. These precautions in one embodiment call for the complex of an organic acid or ester with a Lewis acid to be formed below the decomposition temperature of the complex and be maintained below such temperature until their use to initiate the polymerization.

Since the formation of the initiating organic acid or ester - Lewis acid complex is instantaneous, in another embodiment, the reaction can also be carried out by mixing the monomer and initiator, and then introducing the Lewis acid, at a temperature that is higher than the decomposition temperature of the initiating complex. These complexes may have its molecular weight increased by addition of the olefin monomers thereto, either alone, in combination, or in series, at a temperature below or above the complexes decomposition temperature provided the temperature at which the addition or polymerization of the olefin occurs is such that the rate of decomposition of the complex is low so that the decomposition of the complex does not prevent or occur before the polymerization of the olefin.

In this special embodiment, the premade or in situ made complex of an organic acid or ester and a Lewis acid at a temperature where the half life of the complex is 5 minutes to an hour or more is mixed with the olefin monomer or monomers with or without suitable solvents at a temperature where the polymerization rate preferably is sufficient to substantially complete the polymerization prior to decomposition of a sufficient amount of the complex to stop or prevent the polymerization going to the desired degree of completion. For instance, the premix of the ester and monomer is made and then mixed with the Lewis acid or, in some cses, mixture of Lewis acid can form the complex essentially instantaneously and thus initiate monomer polymerization and complete said polymerization prior to decomposition of the complex to prevent formation of polymer of the desired molecular weight.

To specifically illustrate this special embodiment, any of the complexes set forth herein or made according to the teachings hereof, could be made at a temperature below its decomposition temperature, for instance minus 10°C to minus 40°C, preferably in a hydrocarbon or chlorohydrocarbon solvent at a very high concentration, viz., a catalyst concentrate. Then, this premade complex is added with mixing to a suitable reactor that contains the olefin monomer at a temperature of 10° to 50°C, where the complex effects polymerization of the olefin in the mixture at a temperature preferably of 10° to 50° prior to

decomposition of sufficient complex to stop the polymerization prior to obtaining a polymer of the desired molecular weight.

In another embodiment, the premade complex made below its decomposition temperature simultaneously is charged and mixed with the monomer to give a mixture above the decomposition temperature of the complex, and the mixing is controlled to give a temperature where the rate of decomposition of the complex is sufficiently so low that the undecomposed complex effects sufficient polymerization of the monomer to give the desired polymer of the desired molecular weight. It being undestood that when sufficient of the complex has decomposed, the reaction stops. Thus, we have discovered that polymerization under these special embodiment conditions can be practiced because the rates of polymerizations are relatively fast, usually being complete in a manner of one to three minutes and in nearly all cases, in a matter of 30 minutes while the rate of decomposition is such to give a half life of 5 minutes to an hour at temperatures of 20 °C to 30 °C. Therefore, not only homopolymers but copolymers and block polymers can be made above the decomposition temperature of the complex when these precautions are taken.

The polymerization most likely occurs by the opening of the ester bond and monomer insertion, as illustrated by the following schematic and illustrative equation:

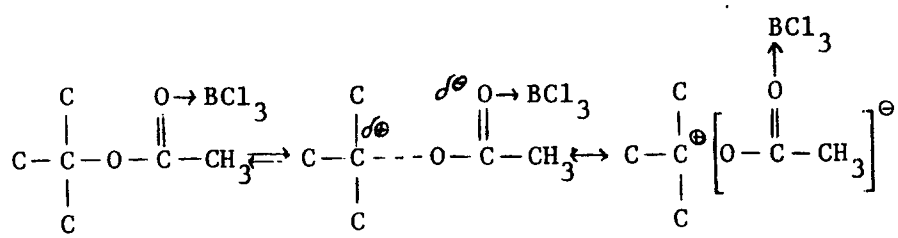

Using the last formula in the above equation, we will exemplify the monomer insertion in the following schematic equation:

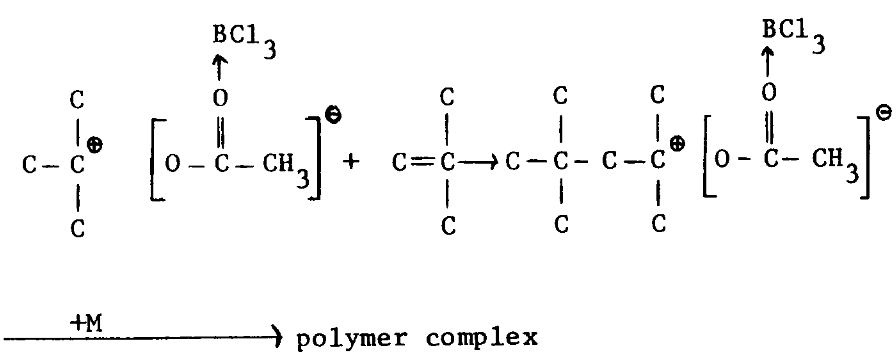


The complex counter anion is supernonnucleophilic, i.e., it does not assist or cause proton elimination from the carbocation. This is a very important characteristic that distinguishes our counter anions from other known nonnucleophilic counter anions, e.g., $BCl_4^{\ominus}$ , $BF_4^{\ominus}$ , and $AlCl_4^{\ominus}$ . In conventional polymerizations taking place in the presence of simple nonnucleophilic counter anions, the latter assists or causes proton elimination from the growing carbocationic center and thus a species arises that proceeds to protonate monomer. For example, with $BF_4^{\ominus}$ counter anion:

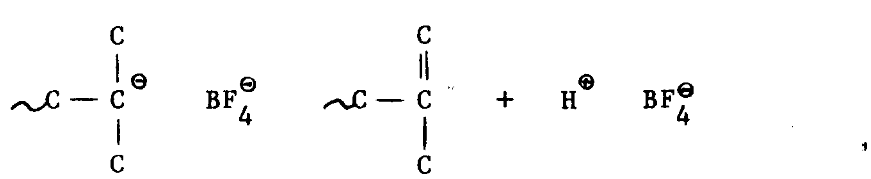

the latter protonates incoming monomer as follows:

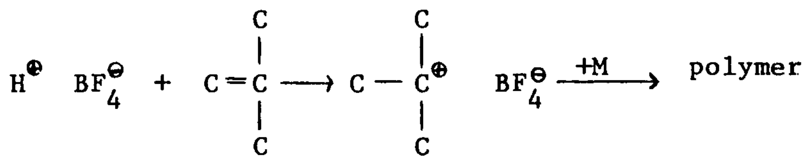


This sequence of events constitutes chain transfer to monomer and it is a most undesirable process for polymer chemists. First of all, this process reduces the molecular weight of the polymer that is formed, and secondly it yields polymers carrying an undesirable unreactive head-group

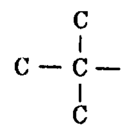

Molecular weight control in systems that involve chain transfer to monomer is more difficult to achieve than in systems devoid of this process. Thus, an advantage of our invention is it avoids the above two shortcomings.

The complex anion of our invention is supernonnucleophilic and as such does not assist or cause deprotonation of the growing carbocationic center. Thus, chain transfer to monomer will not occur in our systems, and consequently molecular weight control can be accomplished by adjusting the relative concentrations of monomer and initiating system, i.e., molecular weight is a function of $[M]_o/[I]_o$, where the subscripts include initial concentrations. The polymer will grow as long as monomer is available and the monomer is not prevented from reacting with the growing center, for example, by the growing center being coagulated from the system or decomposition of sufficient $[I]_o$ to stop the polymerization.

Also on account of the supernonnucleophilic nature of our counter anions, the polymerization is devoid of termination, i.e., the polymerization is relatively terminationless until the temperature exceeds the decomposition temperature of the complex for sufficient time to reduce the $[I]_o$ to zero. The growing center is kept "alive" for extended periods of time without losing its propogating ability. In contrast, in conventional polymerizations termination occurs most likely by a reaction between the growing cation and associated counter anion, for example as set forth hereinafter:

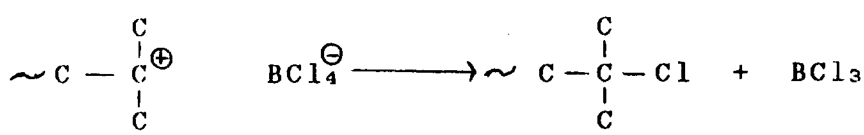

While uninterrupted growth can be maintained for extended periods of time with systems containing supernonnucleophilic counter anions, if termination is desired, say for the preparation of low molecular weight end-functionalyzed polymer, such a premature termination reaction can be brought about by either increasing the temperature of the polymerization system and thus decomposing the active growing complex, or by adding a strong nucleophilic terminating agent, such as methanol or ethanol, pyridine, ammonia, an alkyl amine, or water. Thus, our invention provides a mechanism of varying the molecular weight from several hundreds to the millions. These reactions may result in a Cl-terminated polymer (or a halogen-terminated polymer) most likely because of the following termination reaction:

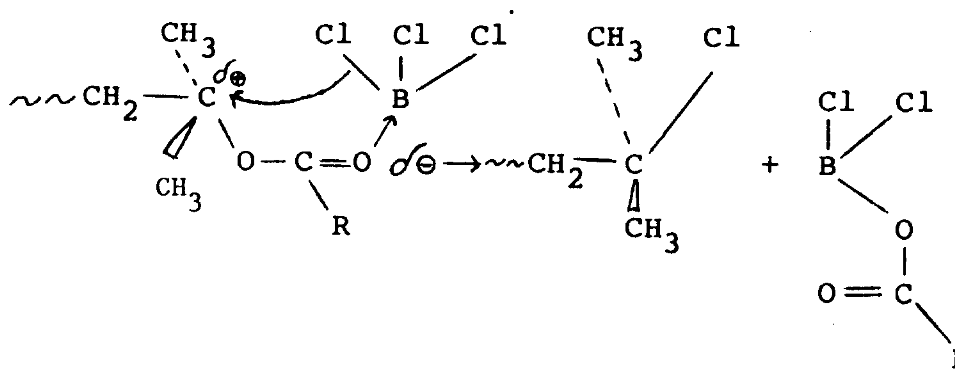

The concurrently formed $BCl_2$ ester is unstable and is converted to other products. The tert.-chloride end group is a valuable end function and can be used in a variety of well known applications.

The $BF_3$ complex yields acetate end groups under the same conditions by decomposition of the catalyst complex. The acetate end group is a valuable function, and its production yields a new composition of matter having valuable properties. For instance, it can be hydrolyzed to the alcohol end group to produce another new composition as illustrated by the following equation:

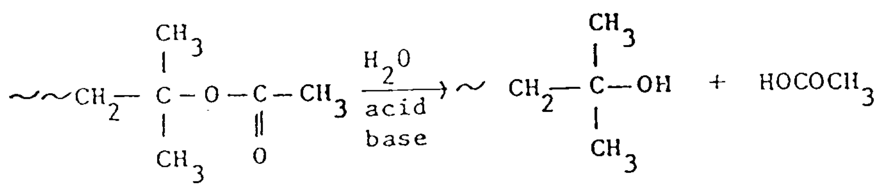


Any of the well known olefin-based monomers may be used in this invention to produce polymers. The alpha-olefins having usually from 2 to 20 and preferably 4 to 8 carbon atoms may be used alone or in conjunction with themselves with a diolefin, either conjugated or nonconjugated, to produce polymers or copolymers of varying molecular weight even as low as 300 to in excess of a million. These polymers can be low molecular weight liquid or viscous polymers of 200 or 500 to 10,000 molecular weight units or the solid waxy to plastic or elastomeric materials of greater than 100,000 to 500,000 to a million or more molecular weight units. Examples of these olefins are those having 2 to 20 or more carbon atoms and are readily available as specific species such as ethylene, propylene, butylene, amylenses, hexylenes, heptylenes, octylenes, the styrenes, alpha-methyl styrenes, or the dienes either nonconjugated or conjugated such as butadiene, isoprene, piperylene, hexadienes and the octadienes, and the cyclic analogues of these such as 1,3-cyclo-hexadiene, to name a few of the well known and representative members.

Examples of the Lewis acids useful in this invention are $BCl_3$, $AlCl_3$, $SnCl_4$, $TiCl_4$, $FeCl_3$, $ZnCl_2$. Although $BCl_3$ and $BF_3$ are the preferred species, the other halogens and the Lewis acids also can be used by replacing one member for another one. Any of the organic acids and esters may be used provided they form a stable complex with the Lewis acids at a suitable polymerization temperature usually minus 40 °C up to 10° to 20 °C, or if the rate of decomposition of the complex at higher temperatures is lower than the rate of polymerization. Also, the organic acids can be monocarboxylic acids, such as formic, acetic, and their homologues, say from 1 to 20 carbon atoms, with those less than 6 carbon atoms being preferred. The di- and tricarboxylic acids and higher can also be used. The mono-, di- and trifunctional acids offer a means of making polymers having certain specific mono-, di- or tri- end group functions such as chloride, formate, allylic, acrylic or methacrylic.

The nature of this invention and its many aspects and advantages may be more readily understood and appreciated by reference to the following representative and illustrative examples.

The general polymerization process used in Examples 1 to 11 was as follows:

A series of test tube runs were made by charging each test tube with solvent, monomer, viz., isobutylene, sometimes abbreviated as IB herein, and an initiator. The polymerization was started by the addition of $BCl_3$ with or without solvent being present with the temperature being as given. The concentrations and results of these runs are given in Tables I through XII, according to the experimental run listed. The polymerization was, in most cases, very rapid, i.e., the conversions reached their final values within a few minutes. Nevertheless, to be sure that the reactions did proceed to completion, the polymerization time

was extended to 30 minutes. After this time, the reactions were quenched by the addition of 3.0 ml of prechilled methanol. The polymer was recovered by a conventional workup, i.e., evaporation of volatiles, dissolution in n-hexane, decantation or filtration of inorganic residues such as boron compounds or the other Lewis acid residues, removal of hexane by evaporation at room temperature. The fact that the products were not washed insured complete product recovery; i.e., no loss of low molecular weight components. The polymer products were characterized by a variety of techniques including IR, $^{1}H$ and $^{13}C$ NMR spectroscopy, osmometry and GPC with dual detection with infrared and ultraviolet.

EXAMPLE 1

A series of experiments were made using tert.-butyl acetate as the initiator. The results of the individual experiments, a total of 23 runs, are shown in Table I, together with the conditions (concentration of chemicals, temperatures, etc.) used.

According to the data, tert.-butyl acetate is an efficient initiator, molecular weight control can be readily achieved by controlling the $[M]_o$ and $[I]_o$, and chain transfer to monomer is absent even at 0 ° C. Since chain transfer to monomer did not occur at the relatively high temperature of 0 ° C, this reaction is also absent in runs carried out at lower temperatures, as indicated by $^{1}H$ NMR spectroscopy. Further, based on a variety of analytical techniques (IR, $^{1}H$ NMR, GPC), the polymers contain a tert.-butyl head group and a tert.-chlorine tail group, as shown by the following formula:

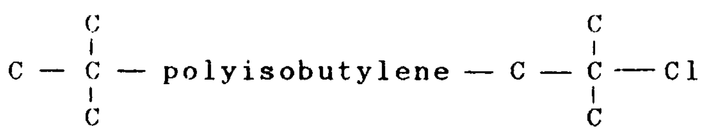

using isobutylene as the monomer.

TABLE I

Monomer: isobutylene [M] = 1 mol/l

Initiator: tert.-butylacetate [I] = as stated, mol/l

Coinitiator: $BCl_3$ $[BCl_3] = 2.6 \times 10^{-1}$ mol/l

Solvent: as stated

Polymerization Time: 30 minutes, unless stated otherwise

| Run Number | Temp. °C | Solvent | [I] | Conversion Percent | $\bar{M}_n$ | $\bar{M}_w$ | $\bar{M}_w/\bar{M}_n$ |
|---|---|---|---|---|---|---|---|
| 1a | | | $2.8 \times 10^{-2}$ | 74.5* | 6000 | 9400 | 1.6 |
| 1b | -50°C | $CH_3Cl$ | $2.8 \times 10^{-2}$ | 100 * | 7370 | 15000 | 2.0 |
| 1c | | | $5.6 \times 10^{-2}$ | 100 | 4240 | 7210 | 1.7 |
| 1d | | | $5.6 \times 10^{-2}$ | 100 | 4340 | 7420 | 1.7 |
| 1e | | | $5.6 \times 10^{-3}$ | 9.4 | 27400 | 48800 | 1.8 |
| 1f | | | $5.6 \times 10^{-3}$ | 13.5 | 31000 | 48200 | 1.5 |
| 1g | | | $5.6 \times 10^{-3}$ | 55.0** | 22000 | 39000 | 1.8 |
| 1h | | | $2.8 \times 10^{-2}$ | 43.5 | 5480 | 10200 | 1.8 |
| 1i | -30°C | $CH_3Cl$ | $2.8 \times 10^{-2}$ | 87.5 | 4130 | 8400 | 2.0 |
| 1j | | | $2.8 \times 10^{-2}$ | 100 | 4650 | 8930 | 1.9 |
| 1k | | | $5.6 \times 10^{-2}$ | 100 | 2950*** | 5590 | 1.9 |
| 1l | | | $5.6 \times 10^{-2}$ | 100 | 3360*** | 6290 | 1.9 |
| 1m | | | $5.6 \times 10^{-2}$ | 100 | 3200*** | 6200 | 1.9 |
| 1n | | | $5.6 \times 10^{-2}$ | 100 | 2750*** | 5600 | 2.0 |

TABLE I (continued)

| Run Number | Temp. °C | Solvent | [I] | Conversion Percent | $\bar{M}_n$ | $\bar{M}_w$ | $\bar{M}_w/\bar{M}_n$ |
|---|---|---|---|---|---|---|---|
| 1o | | | $5.6x10^{-3}$ | 100 | 27500 | 66800 | 2.4 |
| 1p | -30°C | $CH_2Cl_2$ | $2.8x10^{-2}$ | 100 | 4230 | 10420 | 2.4 |
| 1q | | | $5.6x10^{-2}$ | 100 | 2470*** | 5950 | 2.4 |
| 1r | -20°C | $CH_2Cl_2$ | $2.8x10^{-2}$ | 100 | 5940 | 10700 | 1.8 |
| 1s | | | $5.6x10^{-2}$ | 100 | 2260*** | 6900 | 3.0 |
| 1t | -10°C | $CH_2Cl_2$ | $2.8x10^{-2}$ | 100 | 4370 | 9200 | 2.1 |
| 1u | | | $5.6x10^{-2}$ | 100 | 2040*** | 5090 | 2.5 |
| 1v | 0°C | $CH_2Cl_2$ | $2.8x10^{-2}$ | 100 | 4000 | 8100 | 2.0 |
| 1w | | | $5.6x10^{-2}$ | 100 | 2100*** | 4560 | 2.2 |

* In these experimental runs, the polymerization time was 1 hour

** In these experimental runs, the polymerization time was 100 minutes

*** Examination of the polymer showed the absence of terminal unsaturation in the product indicating the absence of chain transfer to the monomer.

TABLE II

Monomer: isobutylene, [M] = 1 mol/l

Initiator: 2,4,4-trimethylpenty-2-acetate [I]=as stated

Coinitiator: $BCl_3$ = 2.6 $10^{-2}$ mol/l

Solvent: as stated

Temperature: as stated

Polmerization Time: 30 minutes

| Run Number | Temp. °C | Solvent | [I] | Conversion % | $\bar{M}_n$ | $\bar{M}_w$ | $\bar{M}_w/\bar{M}_n$ |
|---|---|---|---|---|---|---|---|
| 2a | -50°C | $CH_3Cl$ | $5.6x10^{-3}$ | 100 | 10500 | 21500 | 2.0 |
| 2b | | | $2.8x10^{-2}$ | 100 | 1800 | 6300 | 3.6 |
| 2c | | | $5.6x10^{-2}$ | 100 | 1400 | 3400 | 2.4 |
| 2d | -30°C | $CH_3Cl$ | $5.6x10^{-3}$ | 100 | 10770 | 15750 | 1.46 |
| 2e | | | $2.8x10^{-2}$ | 100 | 2090 | 5320 | 2.5 |
| 2f | | | $2.8x10^{-2}$ | 100 | 2200 | 5650 | 2.5 |
| 2g | | | $5.6x10^{-2}$ | 100 | 1290 | 2800 | 2.2 |
| 2h | -30°C | $CH_3Cl$/n-hexane (60:40) | $2.8x10^{-2}$ | 100 | 2260 | 3150 | 1.39 |

## EXAMPLE 2

Another series of experiments were made using 2,4,4-trimethylpentyl-2-acetate as the initiator instead of the tertiary butyl acetate of Example 1. The solvent was mixed with the initiator and monomer at the temperature indicated for the various runs in Table II and then were added to the reactor, and last the $BCl_3$ was added. The runs from 2a through 2h show the molecular weight varied from about 1,300 to in excess of 10,000.

EXAMPLE 3

The experimental conditions of Examples 1 and 2 were used in this example except the initiator was benzyl acetate and the temperature varied from minus 30° to minus 50°C and showed that polymer was produced over the range of molecular weights from about 30,000 to 125,000 and higher. The data for these experiments 3a through 3d is shown in Table III.

Ultraviolet spectrographic analysis of the polymers of Table III indicated the phenyl ring was in the polymer. Benzyl acetate is an initiator in conjunction with $BCl_3$ for the polymerization of an olefin such as IB, and molecular weight control is possible. These polymers are new and have the following generic structure.

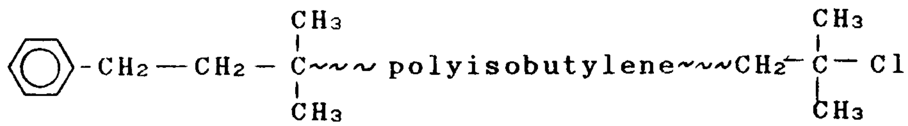

Thus, this method provides a method to produce polymers where the polyolefin segment can be any olefin segment such as polyisobutylene or PIB, polypentene, polyhexene, polyheptene, polyoctene, polystyrene, poly-alpha-methylstyrene, to name a few of the more common olefin monomer segments, or mixtures of these alpha-olefins or other alpha-olefins.

## TABLE III

Monomer: isobutylene, [M] = 1 mol/l

Initiator: benzyl acetate, [I]= as stated, mol/l

Coinitiator: $BCl_3$ $[BCl_3] = 2.6 \times 10^{-1}$, mol/l

Solvent: $CH_3Cl$

Polymerization Time: 30 minutes

| Run Number | Temperature °C | [I] | Conversion % | $\bar{M}_n$ | $\bar{M}_w$ | $\bar{M}_w/\bar{M}_n$ |
|---|---|---|---|---|---|---|
| 3a | | $5.6\times10^{-3}$ | 8.4 | 126300 | 228700 | 1.8 |
| 3b | -50°C | $2.8\times10^{-2}$ | 9.4 | 80200 | 139100 | 1.7 |
| 3c | | $5.6\times10^{-2}$ | 12.5 | 66700 | 115800 | 1.7 |
| 3d | -30°C | $5.6\times10^{-2}$ | 5.6 | 36100 | 6100 | 1.7 |

EXAMPLE 4

A series of experiments were made according to the procedure of Example 1 using cumyl acetate as the initiator and the results of these experiments are reported in Table IVa, IVb and IVc.

NMR and ultraviolet analysis of the polymer of Table IVa indicated the structure shown:

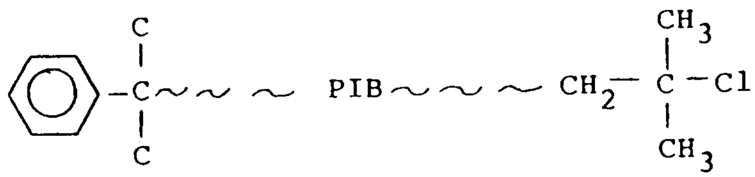

This structure is the same structure obtained by the polymerization of IB with the known cumyl chloride inifer system.

TABLE IV(a)

Monomer: isobutylene, [M] = mol/l

Initiator: cumyl acetate, [I] = as stated, mol/l

Coinitiator: $BCl_3$ expressed as $[BCl_3] = 2.6x\ 10^{-1}$ mol/l

Solvent: $CH_3Cl$

Polymerization Time: 30 minutes

Temperature: $-30^oC$

| Run Number | [I] | Conversion % | $\bar{M}_n$ | $\bar{M}_w$ | $\bar{M}_w/\bar{M}_n$ |
|---|---|---|---|---|---|
| 4a | $5.80x10^{-4}$ | 16.2 | 19300 | 32700 | 1.7 |
| 4b | $5.84x10^{-3}$ | 100* | 8510 | 13600 | 1.6 |
| 4c | $2.92x10^{-2}$ | 100 | 2000 | 3400 | 1.7 |
| 4d | $5.84x10^{-2}$ | 100 | 1160 | 2820 | 2.4 |

*Conversion was 100% after 1 minute of polymerization time.

TABLE IV(b)

Monomer: isobutylene, [M] = 1 mol/l

Initiator: cumyl acetate, [I] = as stated, mol/l

Coinitiator: $BCl_3$ expressed as $[BCl_3]$ = 2.8x $10^{-1}$ mol/l

Solvent: $C_2H_5Cl$

Polymerization Time: 30 minutes

Temperature: -30°C

| Run Number | [I] | Conversion % | $\bar{M}_n$ | $\bar{M}_w$ | $\bar{M}_w/\bar{M}_n$ |
|---|---|---|---|---|---|
| 4b/a | $5.6x10^{-3}$ | 100* | 9500 | 14100 | 1.48 |
| 4b/b | $2.8x10^{-2}$ | 100 | 2390 | 3980 | 1.66 |
| 4b/c | $5.6x10^{-2}$ | 100 | 1260 | 2050 | 1.6 |

* conversion was 100% after 1 minute polymerization time.

TABLE IV(c)

Monomer: isobutylene, [M] = as stated, mol/1

Initiator: cumyl acetate, [I] = $5.6x10^{-3}$ mol/1

Coinitiator: $BCl_3$ [$BCl_3$] = 2.8x $10^{-1}$ mol/1

Solvent: $CH_2Cl_2$

Polymerization Time: 30 minutes

Temperature: -10°C

| Number | [M] | Conversion % | $\bar{M}_n$ | $\bar{M}_w$ | $\bar{M}_w/\bar{M}_n$ |
|---|---|---|---|---|---|
| 4c/a | 0.225 | 100 | 2640 | 5000 | 1.89 |
| 4c/b | 0.45 | 100 | 5800 | 9900 | 1.7 |
| 4c/c | 0.676 | 100 | 8200 | 13900 | 1.69 |
| 4c/d | 0.9 | 100 | 10400 | 16300 | 1.57 |

EXAMPLE 5

In these experimental runs, a difunctional initiator, 2,5-dimethyl-2,5-hexane diol diacetate was used in place of the initiator of Example 4 and the polymerization temperature was lower, namely minus 50 °C.

2,5-Dimethyl-2,5-hexane diol diacetate is an initiator in conjunction with $BCl_3$ for the polymerization of IB, and molecular weight control is possible. The polymer produced has the following structure:

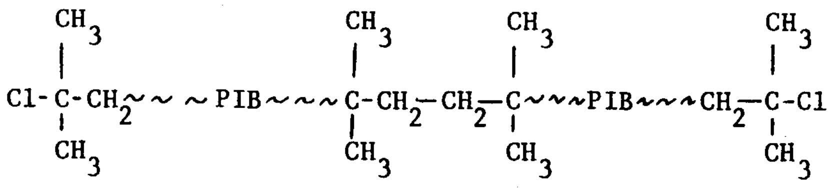

This composition has fully aliphatic telechelic end groups whereas the prior art telechelic polymers contained partial aromatic end groups. Again, this method provides a method to produce the above polymers where the PIB segment can be a polyolefin segment. Thus, in the generic formula for the above fully aliphatic telechelic end groups, composition of the PIB segment would be replaced with polyolefin segments, such as blocks of aliphatic olefins of about 2 to 20 carbon atoms and conjugated diolefin segments of 4 to 12 carbon atoms.

TABLE V

Monomer: isobutylene, [M] = 1 mol/l

Initiator: 2,5-dimethyl-2,5-hexane diol diacetate, [I] = as stated, mol/l

Coinitiator: $BCl_3$ $[BCl_3]$ = 2.6x $10^{-1}$ mol/l

Solvent: $CH_3Cl$

Pol. Time: 30 minutes

Temperature: $-50^{o}C$

| Run Number | [I] | Conversion % | $\bar{M}_n$ | $\bar{M}_w$ | $\bar{M}_w/\bar{M}_n$ |
|---|---|---|---|---|---|
| 5a | $5.6x10^{-3}$ | 5.2 | 35100 | 60600 | 1.7 |
| 5b | $2.8x10^{-2}$ | 8.5 | 11100 | 20000 | 1.8 |
| 5c | $5.6x10^{-2}$ | 9.0 | 6150 | 12500 | 2.0 |

## EXAMPLE 6

Another difunctional initiator as shown in Table VI was used in this run instead of the one used in Example 4.

Ultraviolet absorption of the polymers of Table VI indicated the presence of initiator segments, viz., triple bonds. The structure of this new polymer is as follows:

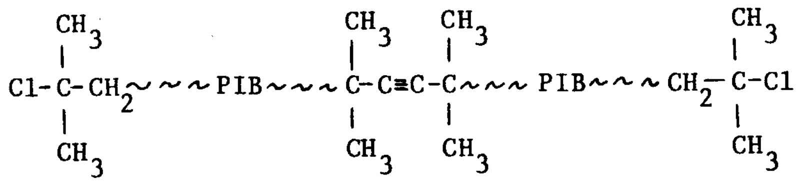

Again, we have a fully aliphatic telechelic polymer which contains an acetylenic bond therein and the PIB segment can be any polyolefin segment such as polystyrene, polyoctene, and polypropylene by changing the monomer to the desired one; say, styrene for example or octadecene. Hence, the polyolefin segment can be homopolymeric, copolymers of different olefins of either aliphatic, cycloaliphatic or aryl in nature.

TABLE VI

Monomer: isobutylene, [M] = 1 mol/1

Initiator: 2,5-dimethyl-2,5-hexyne diol diacetate, [I] = as stated, mol/1

Coinitiator: $BCl_3$ $[BCl_3]$ = 2.6x $10^{-2}$ mol/1

Solvent: $CH_2Cl_2$

Polymerization Time: 30 minutes

Temperature: $-30^oC$

| Run Number | [I] | Conversion % | $\bar{M}_n$ | $\bar{M}_w$ | $\bar{M}_w/\bar{M}_n$ |
|---|---|---|---|---|---|
| 6a | $2.8x10^{-2}$ | 62.2 | 4000 | 5570 | 1.38 |
| 6b | $5.6x10^{-2}$ | 66.7 | 3000 | 4140 | 1.38 |

EXAMPLE 7

A series of runs were made at minus 30 °C with acetic acid as the initiator. The results of these runs are given in Table VII.

EXAMPLE 8

A series of runs were made at various temperatures with tert.-butyl formate as the initiator. The results are given in Table VIII.

Molecular weight control is possible by controlling [M]/[complex] ratio. Ultraviolet spectroscopy analysis indicates the presence of formate end groups in the products of Table VIII. Thus, according to this finding, we have a new composition of matter having the following structure:

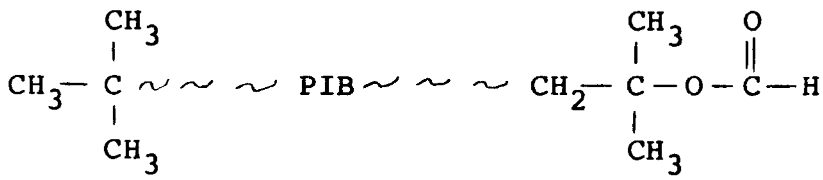

which is characterized by the presence of a formate end group.

Thus, by this method, polymers having the following structure can be made which have a formate end group:

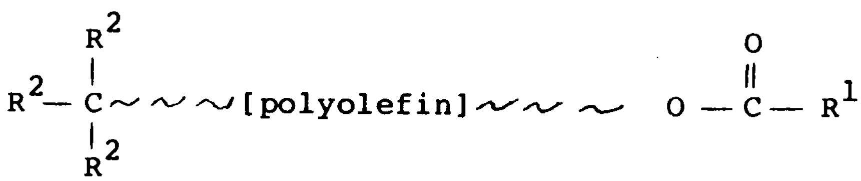

Where the initiator is a di- or trifunctional formate ester, di- and triformate terminated polyolefins are produced. Thus, homo- and copolymers having formate terminal groups are produced where $R^1$ and $R^2$ have values given hereinbefore.

TABLE VII

Monomer: isobutylene, [M] = 1 mol/l

Initiator: acetic acid, [I] = as stated, mol/l

Coinitiator: $BCl_3$ $[BCl_3]$ = 2.6x $10^{-2}$ mol/l

Solvent: $CH_3Cl$

Polymerization Time: 30 minutes

Temperature: $-30^{\circ}C$

| Run Number | [I] | Conversion % | $\bar{M}_n$ | $\bar{M}_w$ | $\bar{M}_w/\bar{M}_n$ |
|---|---|---|---|---|---|
| 7a | $5.6x10^{-3}$ | 100 | 11600 | 14800 | 1.25 |
| 7b | $2.8x10^{-2}$ | 100 | 6700 | 9700 | 1.4 |
| 7c | $5.6x10^{-2}$ | 100 | 4700 | 6900 | 1.5 |

TABLE VIII

Monomer: isobutylene [M] = 1 mol/l

Initiator: tert.-butyl formate [I] = as stated, mol/l

Coinitiator: $BCl_3$ $[BCl_3] = 1.1 \times 10^{-1}$ mol/l

Solvent: $CH_3Cl$

Polymerization Time: 30 minutes

Temperature: as stated

| Run Number | Temp. °C | [I] | Conversion Percent | $\bar{M}_n$ | $\bar{M}_w$ | $\bar{M}_w\bar{M}_n$ |
|---|---|---|---|---|---|---|
| 8a | | $5.6 \times 10^{-3}$ | 100 | 9200 | 79000 | 8.6 |
| 8b | -30°C | $2.8 \times 10^{-2}$ | 100 | 1700 | 10000 | 6.0 |
| 8c | | $5.6 \times 10^{-2}$ | 100 | 900 | 5100 | 5.9 |
| 8d | | $2.8 \times 10^{-4}$ | 63.0 | 109700 | 211000 | 1.9 |
| 8e | | $5.6 \times 10^{-4}$ | 78.1 | 66400 | 157000 | 2.4 |
| 8f | -40°C | $1.4 \times 10^{-3}$ | 100 | 40500 | 10500 | 2.6 |
| 8g | | $2.8 \times 10^{-3}$ | 100 | 22500 | 71600 | 3.1 |
| 8h | | $2.8 \times 10^{-4}$ | 40.0 | 252800 | 421000 | 1.67 |
| 8i | -50°C | $5.6 \times 10^{-4}$ | 58.9 | 136000 | 334000 | 2.45 |
| 8j | | $1.4 \times 10^{-3}$ | 100 | 38000 | 169000 | 4.5 |
| 8k | | $2.8 \times 10^{-3}$ | 100 | 22900 | 69400 | 3.0 |
| 8l | | $5.6 \times 10^{-3}$ | 100 | 12000 | 35000 | 2.8 |
| 8m | | $2.8 \times 10^{-2}$ | 100 | 1700 | 13000 | 8.0 |

TABLE VIII (continued)

| Run Number | Temp. °C | [I] | Conversion Percent | $\bar{M}_n$ | $\bar{M}_w$ | $\bar{M}_w/\bar{M}_n$ |
|---|---|---|---|---|---|---|
| 8n | -60°C | $2.8x10^{-4}$ | 32.0 | 197000 | 340000 | 1.7 |
| 8o | | $5.6x10^{-4}$ | 17.2 | 241000 | 383000 | 1.6 |
| 8p | | $1.4x10^{-3}$ | 100 | 35000 | 172900 | 5.0 |
| 8q | | $2.8x10^{-3}$ | 100 | 28000 | 118000 | 4.15 |

EXAMPLE 9

In these runs, the initiator was an unsaturated formate, specifically allyl formate. The polymerization conditions and results of the runs are listed in Table IX.

Thus, in the experimental runs shown in Table IX, the compound of the formula was produced.

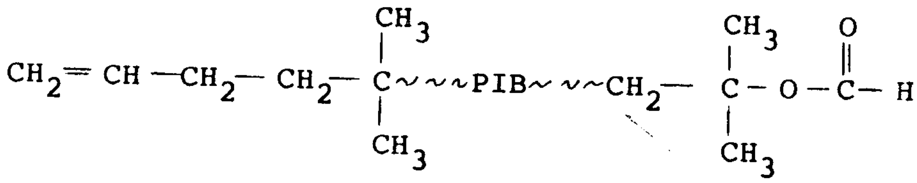

This new composition of matter has an allyl head group. Molecular weight control was achieved from relatively low molecular weights of less than 8,000 to 10,000 to 13,000 up to very high molecular weights of 40,000 to 50,000 to an excess of 100,000. By use of di-, tri- and higher functional acids or esters, it is possible to produce di-, tri- and higher allyl terminated polyolefins where the polymer may be homo, block or copolymers of the olefins of 2 to about 20 carbon atoms, for example.

TABLE IX

Monomer: isobutylene [M] = 1 mol/l
Initiator: allylformate [I] = as stated, mol/l
Coinitiator: $BCl_3$ $[BCl_3]$ = 2.6 x $10^{-1}$ mol/l
Solvent: $CH_3Cl$
Polymerization Time: 30 minutes
Temperature: $-30^oC$

| Run Number | [I] | Conversion Percent | $\bar{M}_n$ | $\bar{M}_w$ | $\bar{M}_w/\bar{M}_n$ |
|---|---|---|---|---|---|
| 9a | $5.6x10^{-4}$ | 43.4 | 87000 | 155000 | 1.8 |
| | | 44.8 | 105000 | 172100 | 1.6 |
| 9b | $1.12x10^{-3}$ | 77.0 | 46000 | 112000 | 2.4 |
| | | 74.2 | 58000 | 111000 | 1.9 |
| 9c | $5.6x10^{-3}$ | 100 | 34000 | 56000 | 1.6 |
| | | 100 | 26000 | 47000 | 1.9 |
| 9d | $2.8x10^{-2}$ | 100 | 15600 | 27100 | 1.7 |
| | | 100 | 13800 | 23600 | 1.7 |
| 9e | $5.6x10^{-2}$ | 100 | 10200 | 19500 | 1.9 |
| | | 100 | 8200 | 16900 | 2.1 |
| 9f | $1.12x10^{-1}$ | 100 | 6500 | 15300 | 2.3 |

EXAMPLE 10

Another series of runs were made using tert.-butyl acrylate as the initiator, the solvents are listed in Table X. The results of these runs are shown in that table. It should be appreciated that other well known acrylate or methacrylate esters, such as methyl, ethyl or alkyls of 20 or more carbon atoms with the Lewis acids may be used as initiators to produce polymers having ethylenic unsaturation as the end group. Also, the acrylic and methacrylic esters of the diols, triols, tetraols and related polyols of the monomeric to polymeric polyols can be used. Thus, with the polymeric polyols, polymers can be produced having heterogeneous oxygen therein of one or two, up to those of a few hundred to over 5,000 to 10,000.

The following new composition of matter having the important acrylic tail group has been produced:

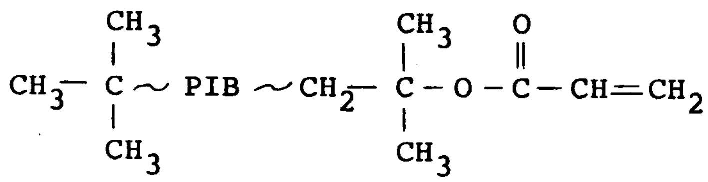

This can be used to crosslink and modify other acrylic or methacrylic polymers. Thus, these reactions with acrylic and methacrylic initiators produce a new generic class of compositions of the following formula:

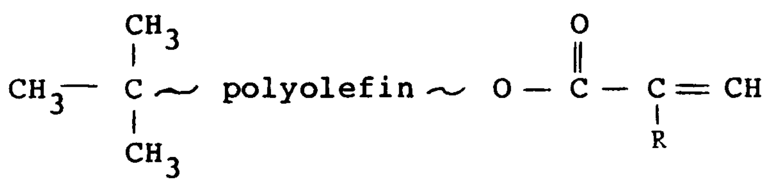

where R is H or $CH_3$.

Thus, it is possible by changing the functionality of the acid or ester to produce polymers having one, two, three or more acrylic groups.

## TABLE X

Monomer: Isobutylene [M] = 1 mol/l

Initiator: tert.-butyl acrylate [I] = as stated, mol/l

Coinitiator: $BCl_3$ [$BCl_3$] = 2.6 x $10^{-1}$ mol/l

Solvent: As stated

Temperature: -30°C

Polymerization Time: 30 minutes

| Run Number | Solvent | [I] | Conversion % | $\bar{M}_n$ | $\bar{M}_w$ | $\bar{M}_w/\bar{M}_n$ |
|---|---|---|---|---|---|---|
| 10a | $CH_3Cl$ | $5.6x10^{-3}$ | 16.2 | - | - | - |
| 10b | | $2.8x10^{-2}$ | 68.5 | 3800 | 7200 | 1.9 |
| 10c | | $5.6x10^{-2}$ | 100 | 2400 | 4200 | 1.8 |
| 10d | $CH_2Cl_2$ | $5.6x10^{-3}$ | 76.8 | 11000 | 42150 | 3.8 |
| 10e | | $2.8x10^{-2}$ | 100 | 4900 | 10700 | 2.2 |
| 10f | | $5.6x10^{-2}$ | 100 | 3200 | 6900 | 2.1 |

EXAMPLE 11

To show that lactones, a special class of esters, could act as initiators with the various Lewis acids, a series of runs were made with γ-phenyl-γ-butrolactone as the initiator under conditions shown in Table XI, with the results shown. It should be noted it was possible to make polymers of very low molecular weight, less than about 4,000 to 8,000 and higher molecular weights of greater than 50,000, and the polymer at lower range was liquid to rubbery in the higher range.

TABLE XI

Monomer: isobutylene [M] = 1 mol/l
Initiator: phenyl- -butyrolactone [I] = as stated, mol/l
Coinitiator: $BCl_3$ $[BCl_3] = 2.6 \times 10^{-1}$ mol/l
Solvent: $CH_3Cl$
Polymerization Time: 60 minutes unless stated otherwise
Temperature: -30°C

| Run Number | [I] | Conversion Percent | $\bar{M}_n$ | $\bar{M}_w$ | $\bar{M}_w/\bar{M}_n$ | Nature of Product |
|---|---|---|---|---|---|---|
| 11a | $5.6 \times 10^{-4}$ | 42.6 | 70300 | 121700 | 1.8 | rubbery |
| 11b | | 55.7* | 51000 | 91000 | 1.8 | |
| 11c | $1.12 \times 10^{-3}$ | 22.1 | 62000 | 108000 | 1.7 | - |
| 11d | | 53.7* | 27000 | 74000 | 2.7 | |
| 11e | $5.6 \times 10^{-3}$ | 28.1 | 17870 | 33600 | 1.9 | |
| 11f | | 5.1* | 14500 | 24400 | 1.7 | |
| 11g | $2.8 \times 10^{-2}$ | 16.0 | 6380 | 33600 | 1.9 | |
| 11h | | 54.1* | 8500 | 14300 | 1.7 | |
| 11i | $5.6 \times 10^{-2}$ | 25.9 | 4870 | 8100 | 1.7 | liquid |
| 11j | | 69.8* | 6680 | 10500 | 1.5 | |
| 11k | $1.12 \times 10^{-1}$ | 100* | 4800 | 7300 | 1.5 | |

* indicates the polymerization time was extended to 2.5 hours.

EXAMPLE 12

In this series of runs at conditions of Table XII, tertiary butyl formate was used to produce polymers of propylene having an oily fluid to a viscous balsam nature. Thus, polypropylene polymers can be produced forming one or more formate terminal groups.

TABLE XII

Monomer: Propylene [M] = 1 mol/l

Initiator: Tert-butyl formate [I] = as stated, mol/l

Coinitiator: $BCl_3$ $[BCl_3]$ = $2.6 \times 10^{-1}$ mol/l

Solvent: $CH_3Cl$

Temperature: $-40^{o}C$

Polymerization Time: 2.5 hours

| Run Number | [I] | Conversion % | Nature of Product |
|---|---|---|---|
| 12a | $5.6 \times 10^{-4}$ | 2.2 | viscous balsam |
| 12b | $1.11 \times 10^{-3}$ | 6.6 | viscous balsam |
| 12c | $5.6 \times 10^{-3}$ | 47.5 | viscous fluid |
| 12d | $5.6 \times 10^{-2}$ | 91.9 | viscous fluid |
| 12e | $5.6 \times 10^{-2}$ | 97.3 | oily fluid |

EXAMPLE 13

To prove the living nature of IB or related olefins initated by the supernonnucleophilic counter anion complex, a number of experiments were run and then linear plots of $\overline{M}_n$ versus grams of polymer formed in the reactor (the figures shown herein) were constructed to see if the plots are linear and whether they cross the origin on extrapolation.

These series of experiments were run in a series of test tubes which were charged with 24 ml $CH_2Cl_2$ 2,4,4-trimethylpentyl-2-acetate hereinafter called TMPOAc ($5.6 \times 10^{-3}$ mol/l) and 0.5 ml IB, in that order, and thermoequilibrated at minus 30 °C. Then the polymerization was started by introducing 0.5 ml $BCl_3$ - (liquefied) into the test tubes. The $BCl_3$ concentration was $2.8 \times 10^{-1}$ mol/l in the reactor. After 30 minutes of reaction time, the reaction in the first of the test tubes was killed by the addition of methanol, whereas an additional 0.5 ml IB was added to the rest of the tubes. After 30 minutes, the reaction in the second tube was killed whereas an additional 0.5 ml IB was added to the remaining tubes. This procedure was repeated until all the charges in the series of test tubes had been quenched. After conventional workup, the amount of polymer and its molecular weight and molecular weight distribution were determined. These data are given in Table XIIIa, and the corresponding plot is given in Fig. 1.

A similar series of experiments have been carried out with a different order of reagent addition. In this experiment, the TMPOAc and $BCl_3$ were premixed in 12 ml $CH_2Cl_2$ and into this system was added 0.5 ml IB dissolved in 12 ml $CH_2Cl_2$ at minus 30°C. Thus, the initial concentrations of the ingredients, i.e., TMPOAc, $BCl_2$ and IB were the same in both series. Except for this premixing of the TMPOAc and $BCl_3$, the further course of the experiment was identical to that described above. Fig. 1 shows the plot of the results.

The fact that the $\overline{M}_n$ versus grams of PIB formed plot is linear and crosses the origin indicates the living nature of the polymerization system, i.e., each additional monomer increment contributes proportionally to the molecular weight.

The premixing of TMPOAc and $BCl_3$ technique is advantageous as it produces narrower molecular weight distribution polymer than the TMPOAc and monomer and $BCl_3$ addition sequence. This effect can be seen by inspecting the $\overline{M}_w/\overline{M}_n$ columns. The $\overline{M}_w/\overline{M}_n$ values are lower in the experiment with TMPOAc and $BCl_3$ premixing.

An identical series of experiments have been carried out using $CH_3Cl$ as the diluent. The data is shown in Table XIIIb and these data also yielded a plot similar to that of Fig. 1.

An identical series of experiments have been carried out with the cumyl acetate $BCl_3$ complex initiator in $CH_2Cl_2$ as the solvent. The data are shown in Table XIIIc and are plotted in Fig. 2. Note that one experiment was carried out at a temperature of minus 10°C.

An identical experiment has been carried out with cumyl acetate and $BCl_3$ using $CH_3Cl$ as the diluent. The data are shown in Table XIIId and are plotted in Fig. 3.

Similarly, three identical series of experiments have been carried out with cumyl acetate and $BCl_3$ in various solvent systems. A mixture on a volume basis of 80/20 $CH_2Cl_2$/n-hexane [Table XIIIe], a mixture of 60/40 $CH_2Cl_2$ [Table XIIIf], and $C_2H_5Cl$ [Table XIIIg]. Corresponding plots of the data from these three experiments, indicated these were living polymerizations.

Finally, a series of experiments have been carried out by the dicumyl acetate $BCl_3$ complex initiator. In this system, polymer growth is expected to occur at both acetae linkages. Table XIIIh and Fig. 4 show the data for these experiments.

TABLE XIIIa

Monomer: isobutylene

Initiator: TMPOAc $[I] = 5.6x10^{-3}$ mol/l

Coinitiator: $BCl_3$ $[BCl_3] = 2.8x10^{-1}$ mol/l

Solvent: $CH_2Cl_2$ (initial charge: 24 ml)

Polymerization Time: 30 minutes between each addition

Temperature: $-30^{o}C$

Killing with MeOH (~ 3ml, precooled)

| Run Number | Isobutylene added, ml | $\bar{M}_n$ | $\bar{M}_w$ | $\bar{M}_w/\bar{M}_n$ | Polymer Formed, g |
|---|---|---|---|---|---|
| 13(a) | 0.5 | 2300 | 12400 | 5.5 | 0.30 |
| 13(b) | 0.5 + 0.5 | 3900 | 15700 | 4.1 | 0.63 |
| 13(c) | 0.5 + 0.5 + 0.5 + 0.5 + 0.5 + 0.5 | 11600 | 20050 | 1.7 | 1.80 |
| 13(d) | 0.5 | 2900 | 11350 | 3.9 | 0.31 |
| 13(e) | 0.5 + 0.5 | 4250 | 15100 | 3.6 | 0.59 |
| 13(f) | 0.5 + 0.5 + 0.5 + 0.5 | 8500 | 18700 | 2.2 | 1.20 |
| 13(g) | 0.5 + 0.5 + 0.5 + 0.5 + 0.5 + 0.5 | 11500 | 18600 | 1.6 | 1.80 |
| 13a/h | 0.5 | 3000* | 9050 | 3.0 | 0.33 |
| 13a/i | 0.5 + 0.5 + 0.5 | 7800 | 19600 | 2.5 | 0.96 |
| 13a/j | 0.5 + 0.5 + 0.5 + 0.5 + 0.5 | 10500 | 22580 | 2.1 | 1.49 |
| 13a/k | 0.5 + 0.5 + 0.5 + 0.5 + 0.5 + 0.5 | 13000 | 22500 | 1.7 | 1.76 |

*premixed initiator/coinitiator - helped to narrow MWD.

## TABLE XIIIb

Monomer: isobutylene

Initiator: TMPOAc $[I] = 5.6x10^{-3}$ mol/l

Coinitiator: $BCl_3$ $[BCl_3] = 2.8x10^{-1}$ mol/l

Solvent: $CH_3Cl$ (initial charge: 24 ml)

Polymerization Time: 30 minutes between each addition

Temperature: $-30^{o}C$

| Run Number | Isobutylene added, ml | $\overline{M}_n$ | $\overline{M}_w$ | $\overline{M}_w/\overline{M}_n$ | Polymer formed, g |
|---|---|---|---|---|---|
| 13b/a | 0.5 | 2700 | 9950 | 3.7 | 0.29 |
| 13b/b | 0.5 + 0.5 + 0.5 | 4420 | 13800 | 3.1 | 0.64 |
| 13b/c | 0.5 + 0.5 + 0.5 + 0.5 + 0.5 + 0.5 | 8000 | 19200 | 2.4 | 0.94 |
| 13b/d | 0.5 | 2800 | 10900 | 3.9 | 0.31 |
| 13b/e | 0.5 + 0.5 + 0.5 + 0.5 + 0.5 + 0.5 | 10900 | 21560 | 2.0 | 1.34 |
| 13b/f | 0.5 | 3000* | 7000 | 2.3 | 0.33 |
| 13b/g | 0.5 + 0.5 | 5300 | 9600 | 1.8 | 0.55 |
| 13b/h | 0.5 + 0.5 + 0.5 | 7200 | 13000 | 1.8 | 0.80 |
| 13b/i | 0.5 + 0.5 + 0.5 + 0.5 | 8800 | 15500 | 1.76 | 1.04 |
| 13b/j | 0.5 + 0.5 + 0.5 + 0.5 + 0.5 | 10800 | 18360 | 1.7 | 1.25 |
| 13b/k | 0.5 + 0.5 + 0.5 + 0.5 + 0.5 + 0.5 | 12850 | 20560 | 1.6 | 1.51 |

*with premixed initiator/coinitiator (30'); MWD narrowed.

TABLE XIIIc

Monomer: isobutylene

Initiator: cumyl acetate $[I] = 5.6 \times 10^{-3}$ mol/l

Coinitiator: $BCl_3$ 0.5m $BCl_3$ added in initial charge final $[BCl_3] = 2.8 \times 10^{-1}$ mol/l

Solvent: $CH_2Cl_2$ (initial charge: 24 ml)

Polymerization Time: 30 minutes between each addition

Temperature: $-30^{o}C$

| Run Number | Isobutylene added, ml | $\bar{M}_n$ | $\bar{M}_w$ | $\bar{M}_w/\bar{M}_n$ | Polymer formed, g |
|---|---|---|---|---|---|
| 13c/a | 0.5 | 3100 | 6200 | 2.0 | 0.31 |
| 13c/b | 0.5 + 0.5 | 5500 | 7650 | 1.4 | 0.64 |
| 13c/d | 0.5 + 0.5 + 0.5 | 6800 | 9500 | 1.4 | 0.87 |
| 13c/e | 0.5 + 0.5 + 0.5 + 0.5 | 8800 | 13100 | 1.48 | 1.15 |
| 13c/f | 0.5 + 0.5 + 0.5 + 0.5 + 0.5 | 11000 | 15800 | 1.4 | 1.45 |
| | /initial solvent charge: 24 ml | | | | |
| 13c/g | 2 | 2570 | 8400 | 3.2 | 1.22 |
| 13c/h | 2 + 2 | 5600 | 10700 | 1.9 | 1.50 |
| 13c/i | 2 + 2 + 2 | 6900 | 12400 | 1.8 | 3.53 |
| 13c/j | 2 + 2 + 2 + 2 | 8900 | 15800 | 1.79 | 4.62 |
| 13c/k | 2 + 2 + 2 + 2 + 2 | 10000 | 16000 | 1.6 | 5.76 |

/initial solvent charge: 96 ml, 2 ml $BCl_3$ added, final $[BCl_3]$ concentration = $2.8 \times 10^{-1}$ mol/l

## TABLE XIIId

Monomer: isobutylene

Initiator: cumyl acetate [I] = 5.6x$10^{-3}$ mol/l

Coinitiator: $BCl_3$ 0.5m $BCl_3$ added in initial charge
final [$BCl_3$] = 2.8x$10^{-1}$ mol/l

Solvent: $CH_3Cl$ (initial charge: 24 ml)

Polymerization Time: 30 minutes between each addition

Temperature: -30°C

Killing With: MeOH, ~ 3ml, precooled

| Run Number | Isobutylene added, ml | $\bar{M}_n$ | $\bar{M}_w$ | $\bar{M}_w/\bar{M}_n$ | Polymer formed, g |
|---|---|---|---|---|---|
| 13d/a | 0.5 | 2730 | 5500 | 2.0 | 0.31 |
| 13d/b | 0.5 + 0.5 | 3640 | 7080 | 1.94 | 0.43 |
| 13d/c | 0.5 + 0.5 + 0.5 | 5040 | 8430 | 1.67 | 0.59 |
| 13d/d | 0.5 + 0.5 + 0.5 + 0.5 | 6560 | 10360 | 1.58 | 0.75 |
| 13d/e | 0.5 + 0.5 + 0.5 + 0.5 + 0.5 | 7160 | 11620 | 1.6 | 0.90 |
| 13d/f | 0.5 + 0.5 + 0.5 + 0.5 + 0.5 + 0.5 | 8440 | 12850 | 1.5 | 1.12 |
| 13d/g | 0.25 | 1500 | 3040 | 2.0 | 0.14 |
| 13d/h | 0.25 + 0.25 | 1860 | 3200 | 1.7 | 0.20 |
| 13d/i | 0.25 + 0.25 + 0.5 | 2530 | 4850 | 1.9 | 0.32 |
| 13d/j | 0.25 + 0.25 + 0.5 + 0.5 | 3800 | 7830 | 2.0 | 0.50 |
| 13d/k | 0.25 + 0.25 + 0.5 + 0.5 + 0.5 | 4900 | 9500 | 1.9 | 0.60 |
| 13d/l | 0.25 + 0.25 + 0.5 + 0.5 + 0.5 + 0.5 | 6600 | 12000 | 1.7 | 0.76 |

The plot of this data is shown in Fig. 4.

TABLE XIIIe

| | |
|---|---|
| Monomer: | isobutylene |
| Initiator: | cumyl acetate [I] = $5.6 \times 10^{-3}$ mol/l |
| Coinitiator: | $BCl_3$ [$BCl_3$] $2.8 \times 10^{-1}$ mol/l |
| Solvent: | $CH_2Cl_2$/n-hexane, 80v/20v (initial charge 24 ml) |
| Polymerization Time: | 30 minutes between each addition |
| Temperature: | -30°C |

| Run Number | Isobutylene added, ml | $\bar{M}_n$ | $\bar{M}_w$ | $\bar{M}_w/\bar{M}_n$ | Polymer formed, g |
|---|---|---|---|---|---|
| 13e/a | 0.5 | 3500 | 5560 | 1.59 | 0.36 |
| 13e/b | 0.5 + 0.5 + 0.5 | 4880 | 12950 | 2.66 | 0.55 |
| 13e/c | 0.5 + 0.5 + 0.5 + 0.5 | 5400 | 16100 | 3.0 | 0.66 |

TABLE XIIIf

| | |
|---|---|
| Monomer: | isobutylene |
| Initiator: | cumyl acetate [I] = $5.6x10^{-3}$ mol/l |
| Coinitiator: | $BCl_3$ [$BCl_3$] $2.8x10^{-1}$ mol/l |
| Solvent: | $CH_2Cl_2$/n-hexane, 60v/40v (initial charge 24 ml) |
| Polymerization Time: | 30 minutes between each addition |
| Temperature: | $-30^{o}C$ |

| Run Number | Isobutylene added, ml | $\overline{M}_n$ | $\overline{M}_w$ | $\overline{M}_w/\overline{M}_n$ | Polymer formed,g |
|---|---|---|---|---|---|
| 13f/a | 0.5 | 3450 | 6500 | 1.88 | 0.35 |
| 13f/b | 0.5 + 0.5 + 0.5 + 0.5 + 0.5 | 4580 | 11390 | 2.48 | 0.43 |
| 13f/c | 0.5 + 0.5 + 0.5 + 0.5 + 0.5 + 0.5 | 4750 | 12000 | 2.5 | 0.47 |

TABLE XIIIg

Monomer: isobutylene

Initiator: cumyl acetate [I] = $5.6x10^{-3}$ mol/l

Coinitiator: $BCl_3$ [$BCl_3$] $2.8x10^{-1}$ mol/l

Solvent: $C_2H_5Cl$ (initial charge 24 ml)

Polymerization Time: 30 minutes between each addition

Temperature: -30°C

| Run Number | Isobutylene added, ml | $\bar{M}_n$ | $\bar{M}_w$ | $\bar{M}_w/\bar{M}_n$ | Polymer formed, g |
|---|---|---|---|---|---|
| 13g/a | 0.5 | 3150 | 4830 | 1.5 | 0.33 |
| 13g/b | 0.5 + 0.5 | 3400 | 6400 | 1.9 | 0.40 |
| 13g/c | 0.5 + 0.5 + 0.5 | 3900 | 9720 | 2.49 | 0.47 |
| 13g/d | 0.5 + 0.5 + 0.5 + 0.5 | 4100 | 11520 | 2.8 | 0.54 |
| 13g/e | 0.5 + 0.5 + 0.5 + 0.5 + 0.5 | 5100 | 11350 | 2.8 | 0.61 |
| 12g/f | 0.5 + 0.5 + 0.5 + 0.5 + 0.5 + 0.5 | 5200 | 16370 | 3.1 | 0.66 |

TABLE XIIIh

Monomer: isobutylene

Initiator: dicumyl acetate [I] = $5.6\times10^{-3}$ mol/l

Coinitiator: $BCl_3$ [$BCl_3$] $2.8\times10^{-1}$ mol/l

Solvent: $CH_3Cl$ (initial charge 24 ml)

Polymerization Time: 30 minutes between each addition

Temperature: $-30^{o}C$

| Run Number | Isobutylene added, ml | $\bar{M}_n$ | $\bar{M}_w$ | $\bar{M}_w/\bar{M}_n$ | Polymer formed, g |
|---|---|---|---|---|---|
| 13h/a | 0.5 | 1730 | 3090 | 1.78 | 0.32 |
| 13h/b | 0.5 + 0.5 | 2790 | 4750 | 1.7 | 0.54 |
| 13h/c | 0.5 + 0.5 + 0.5 | 4260 | 6560 | 1.54 | 0.85 |
| 13h/d | 0.5 + 0.5 + 0.5 + 0.5 | 5300 | 7610 | 1.44 | 1.09 |
| 13h/e | 0.5 + 0.5 + 0.5 + 0.5 + 0.5 | 6500 | 9430 | 1.45 | 1.28 |
| 13h/f | 0.5 + 0.5 + 0.5 + 0.5 + 0.5 + 0.5 | 7000 | 9760 | 1.39 | 1.47 |

A special embodiment of this invention relates to the random copolymerization of an alpha-olefin such as those exemplified by isobutylene, propylene, pentene or hexene, with a diolefin, preferably a conjugated one such as those exemplified by isoprene, butadiene and piperylene. Thus,m copolymers containing either a major or minor amount of diolefin can be produced. Isobutylene plus an isoprene copolymer containing up to 5 percent isoprene in the chain are articles of commerce. The random polymers produced by this invention have commercial utility as butyl rubbers and especially those having a molecular weight of a hundred thousand and 1 to 4 percent unsaturation. These rubbers are sulfur-vulcanizable, heat stable,

chemically resistant general purpose rubbers which may be used in inner tubes and inner liners of tires, tubes, curing bladders, mountings, vibration dampers, etc., and are convertible to the halogenated form of butyl rubber for other usages. Heretofore, butyl rubber was made commercially by a heterogeneous low temperature (minus 100 °C) cationic suspension polymerization by the use of $AlCl_3$ catalyst in methyl chloride diluent. In order to obtain commercially useful molecular weights, the polymerization has to be carried out at cryogenic temperatures, viz. below minus 100 °C. Therefore, a lot of work has been directed towards the raising of this very low temperature requirement. Also, controlling molecular weight with the $AlCl_3$ system is difficult, it requires changes in reactor temperature. Another problem with conventional polymerizations is reactor fauling. Fauling is the process during which polymer particles crosslink and agglomerate during the run and precipitate on the inner surfaces of the reactor. This adhering layer of crosslinked or gelled polymer decreases cooling efficiency so that molecular weight control becomes impossible. Thus, the reactor has to be shut off and the fauled polymer layer removed by a separate cumbersome and costly process. Great efforts have been extended to overcome fauling.

In Example 14, copolymerization of isobutylene with isoprene was demonstrated to occur readily with our complex catalyst, and that the copolymerization yields random copolymers whose overall composition can be controlled by the isobutylene/isoprene ratio in that charge, and that the molecular weight of the butyl rubber formed can be controlled by the ratio of [monomers]/[initiating complex], and that the copolymerization is living in nature. Also, the percent unsaturation can be controlled over a wide molecular weight range to yield new copolymers of alpha-olefins and dienes which may have higher molecular weights, i.e., in excess of a hundred thousand molecular weight and having unsaturation values of 1, 2, 3 to 5 mole percent and higher. Thus, copolymers having 1 to 90 and preferably 2 to 10 percent of diolefin are readily made.

EXAMPLE 14

A series of copolymerization experiments have been carried out under the following conditions: A series of three test tubes have been charged at minus 30 °C with 22.5 ml $CH_3Cl$, 2.0 ml isobutylene (0.94 mole/l) and 0.1 ml cumyl acetate ($0.56 \times 10^{-1}$ mole/l) in that order. Then in a series of three test tubes, isoprene was introduced, i.e., 0.05 ml (or 2.13 mole percent on isobutylene); 0.1 ml (or 4.26 mole percent on isobutylene); and 0.2 ml (or 8.52 mole percent on isobutylene) isoprene. Finally, the copolymerizations were initiated by the introduction of 0.5 ml $BCl_3$ ($2.8\ 10^{-1}$ mole/l). The polymerizations proceeded with occasional mixings at minus 30 °C for 30 minutes. Then the reactions were killed by adding 3 ml of prechilled methanol. After workup, the conversion, molecular weights, and overall compositions were determined. The latter was obtained by $^1H$ NMR spectroscopy which also indicated that the product contained the isoprene units in the chain in a 1,4-enchainment. Table XIV shows this data.

TABLE XIV

| | | |
|---|---|---|
| Monomer: | isobutylene | $[M_1]$ = 0.94 mol/l |
| | isoprene | $[M_2]$ = as stated, mol/l |
| Initiator: | cumyl acetate | [I] = $5.6 \times 10^{-3}$ mol/l |
| Coinitiator: | $BCl_3$ | $[BCl_3]$ $2.8 \times 10^{-1}$ mol/l |
| Solvent: | $CH_3Cl$ (initial charge 22.5 ml) | |
| Polymerization Time: | 30 minutes | |
| Temperature: | $-30^{\circ}C$ | |

| Run Number | $[M_2]$ | Conversion % | $\bar{M}_n$ | $\bar{M}_w$ | $\bar{M}_n/\bar{M}_w$ | Isoprene in the polymer, mole % |
|---|---|---|---|---|---|---|
| 14a | 0.02 (2.13 m%) | 85.0 | 9100 | 13100 | 1.48 | - |
| 14b | 0.04 (4.26 m%) | 74.3 | 7150 | 11400 | 1.6 | 2.91 |
| 14c | 0.08 (8.52 m%) | 51.8 | 5300 | 9300 | 1.75 | 4.3 |

EXAMPLE 15

Two additional series were carried out to demonstrate the living nature of the copolymerization. The charging of the series of tubes and the polymerization conditions have been described above in Example 14. In the first series of copolymerizations, three tubes were charged to give 4.26 mole percent isoprene in the isoprene solution (relative to isobutylene). After $BCl_3$ addition, the reactions in the first, second and third tubes were killed at 25, 30 and 45 minutes. After workup, the conversions and molecular weights were

determined. The data is shown in Table XVa and Fig. 5.

The second series of copolymerizations have been carried out with 2.13 mole percent isoprene (on isobutylene) in the charge. Copolymerizations were terminated after 5 and 10 minutes after $BCl_3$ addition. In the third tube at 20 minutes, we added a fresh charge of 2.05 ml monomer mixture consisting of 2.0 ml isobutylene and 0.05 ml isoprene, i.e., a charge of 2.13 mole percent isoprene (on isobutylene), and allowed the reaction to proceed for an additional 30 minutes. After killing and workup, the conversion and the molecular weight of the polymers were determined. Table XVb and Fig. 5 show the results.

According to these data, the copolymerizations proceeded in a living manner as indicated by the linear $\overline{M}_n$ versus conversion plots crossing the origin.

The polymerizations described in this invention can be carried out as long as the initiating complex maintains its integrity to give a wide range of molecular weights. Tests determined that the tert.-butyl acetate $BCl_3$ complex is stable up until at least minus 10 °C. Therefore, living and other polymerization can be carried out up to at least minus 10 °C and even to the decomposition temperature of the complex which in most cases is near ambient or 10-30 °C below it, but some initiator complexes allows operating temperatures above 0 °C. Thus, butyl rubber can be made at much higher temperatures than heretofore.

TABLE XVa

| | | |
|---|---|---|
| Monomer: | isobutylene | $[M_1] = 0.94$ mol/l |
| | isoprene | $[M_2] = 0.04$ mol/l (4.26 mol%) |
| Initiator: | cumyl acetate | $[I] = 5.6x10^{-3}$ mol/l |
| Coinitiator: | $BCl_3$ | $[BCl_3]$ $2.8x10^{-1}$ mol/l |
| Solvent: | $CH_3Cl$ (initial charge 22.5 ml) | |
| Polymerization Time: | as stated | |
| Temperature: | $-30^{o}C$ | |

| Run Number | Polymerization Time | Conversion % | $\bar{M}_n$ | $\bar{M}_w$ | $\bar{M}_w/\bar{M}_n$ |
|---|---|---|---|---|---|
| 15a/a | 15 minutes | 58.0 | 5800 | 10480 | 1.8 |
| 15a/b | 30 minutes | 74.9 | 6900 | 11700 | 1.69 |
| 15a/c | 45 minutes | 79.3 | 7500 | 11600 | 1.55 |

TABLE XVb

Monomer: isobutylene $[M_1] = 0.94$ mol/1

isoprene $[M_2] = 0.02$ mol/1 (2.13 mol%)

Initiator: cumyl acetate $[I] = 5.6 \times 10^{-3}$ mol/1

Coinitiator: $BCl_3$ $[BCl_3]$ $2.8 \times 10^{-1}$ mol/1

Solvent: $CH_3Cl$ (initial charge 22.5 ml)

Polymerization Time: as stated

Temperature: $-30^{o}C$

| Run Number | Polymerization Time | Conversion % | $\bar{M}_n$ | $\bar{M}_w$ | $\bar{M}_w/\bar{M}_n$ |
|---|---|---|---|---|---|
| 15b/a | 5 minutes | 77.1 | 7120 | 11400 | 1.6 |
| 15b/b | 10 minutes | 84.7 | 8450 | 13400 | 1.55 |
| 15b/c | 25 minutes | - | - | - | - |
| 15b/d | 30 minutes* | 100 + 18.5 | 11200 | 16050 | 1.44 |

*After 20 minutes polymerization time, 2.05 ml new isobutylene (2 ml) - isoprene (0.05 ml = 2.13 m%) mixture was added and was allowed to polymerize for 30 minutes.

EXAMPLE 16

In this example, 0.06 ml tert.-butyl acetate (t-buAC) and 0.2 ml $BCl_3$ were mixed in 20 ml $CH_2Cl_2$ at minus 10 °C. After 1 hour at this temperature, the IR spectrum of the system (taken against the $CH_2Cl_2$ solvent by the use of the matched cells) indicated the presences of the t-BuAC•$BCl_3$ complex; i.e., presences of an absorption at 1570 $cm^{-1}$ associated with the stretching vibration of the $\rangle C=O \rightarrow BCl_3$ group (the uncomplexed $\rangle C=O$ shows $\nu CO = 1720 cm^{-1}$ in t-BuOAC).

Upon heating the t-BuAC•$BCl_3$ complex to room temperature, the complex slowly decomposes to t-BuCl and $CH_3COCl$ ($\nu CO = 1800$ $cm^{-1}$ in $CH_3COCl$). After one hour at room temperature, 50 percent of the complex has decomposed.

Similar to these experiments, the TMPOAc•$BCl_3$ complex is stable up until minus 10°C but it decomposes quantitatively at room temperature to TMP-Cl and $CH_3COCl$, upon standing at this temperature for sufficient time.

The above two experiments can be regarded as model experiments for these polymer systems. Thus when a polymer prepared by the t-BuAC•$BCl_3$ system in which $CH_3Cl$ diluent at minus 30°C after 30 minutes polymerization was examined, it showed the characteristic CO = 1570 $cm^{-1}$ vibration, indicating the presence of $>$CO $BCl_3$ complex bond. After letting the system warm to room temperature overnight without killing the reaction, both $^1H$ NMR and IR spectroscopy showed the formation of an allyl chloride and $CH_3COCl$.

The fact that the polymer readily decomposes to the tert.-chloride ended structure has important preparative/synthetic implications as it provides a new avenue to valuable tert-chlorine terminated polymers. It is immediately apparent that by the use of difunctional acetate•$BCl_3$ complex initiators, i.e., dicumyl acetate•$BCl_3$ or other diacetates•$BCl_3$ complexes, valuable telechelic polyisobutylenes and related alpha-olefins or diolefin polymers can be prepared.

We have also discovered that the tert.-chloride groups can be quantitatively obtained not only by treating the polymerizing system to bring it to room temperature, but also by adding various nucleophilic killing or quenching agents, i.e., $CH_3OH$, $(C_2H_5)_3N$, pyridine, ammonia, methanol, and sodium methoxide. These experiments were carried out by model and subsequent polymerization studies to show that any of the olefins can be polymerized by the Lewis acid organic acid or ester complex to give a novel polymerization process to produce new polymers.

New compositions of matter having the structure set forth in the formulae below can be made by this invention.

(a)

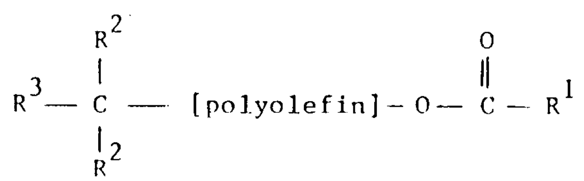

(b)

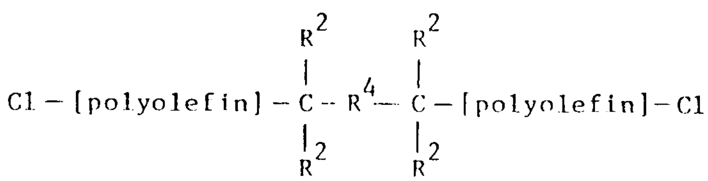

(c)

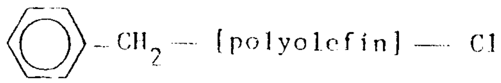

(d)

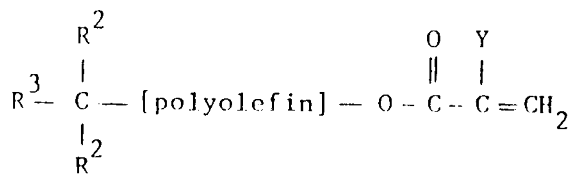

(e)

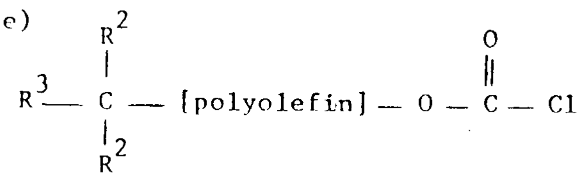

(f)

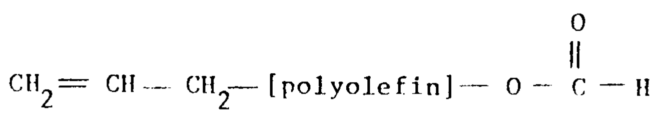

(g)

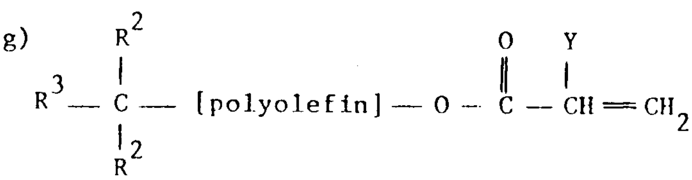

(h)

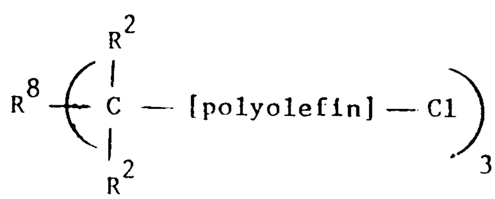

where $R^1$ is hydrogen, halogen or an organic moiety of an organic acid;

$R^2$ is the same as $R^1$;

$R^3$ is the same as $R^2$;

$R^4$ is methylene or polymethylene, ethylenic, acetylenic,

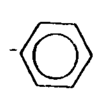 -or

related homologous groups;

$R^8$ is a trivalent organic moiety; and

y is hydrogen or alkyl.

## Claims

**1.** A method of producing a complex of an organic carboxylic acid or ester with a Lewis acid characterised in that the complex has a supernonnucleophilic counter anion and the complex is able to add at least one olefinic monomer and to continue adding said monomer and to increase the molecular weight of

said complex to give a living polymerization system, comprising introducing an organic acid or ester and a Lewis acid into a system and mixing without regard to sequence at a temperature below the decomposition temperature of said complex either in the presence or absence of a solvent for said complex.

**2.** The method of claim 1 wherein sufficient olefin monomer has been added while maintaining the temperature below the decomposition temperature of said complex to increase its molecular weight to within a range of 1000 to above a hundred thousand units.

**3.** The method of claim 2 wherein the added olefin monomer is a mixture of an alpha-olefin and a diolefin.

**4.** The method of claim 1 wherein the Lewis acid and the carboxylic acid or its ester are contacted at a temperature of -10 °C or lower to form said complex.

**5.** A method of producing a complex of an organic carboxylic acid or ester with a Lewis acid where the complex has a supernonnucleophilic counter anion and where the complex is able to add olefin monomers to give a living polymerization system comprising introducing an organic carboxylic acid or ester and a Lewis acid into a system and mixing without regard to sequence at a temperature below the decomposition-temperature of said complex in the presence or absence of a solvent for said complex; said system containing sufficient olefin relative to $[M]_0/[I]_0$ ratio to give the complex a molecular weight greater than 1000, where $[M]_0$ and $[I]_0$ are the initial momomer and initiator concentration, respectively.

**6.** The method of claim 5 wherein the temperature is below minus 10 °C.

**7.** The method of claim 5 wherein the Lewis acid is selected from the class consisting of $BCl_3$, $AlCl_3$, $TiCl_4$, $FeCl_3$, $ZnCl_2$.

**8.** The method of claim 5 wherein the Lewis acid is boron chloride.

**9.** The method of claim 5 wherein sufficient olefin monomer has been added while maintaining the temperature below the decomposition temperature of said complex to increase its molecular weight to within a range of greater than 1000 to above a hundred thousand.

**10.** The method of claim 5 wherein the olefin reacts with the complex to give a polymer complex and to consume essentially all said olefin within 1 to 30 minutes but still has ability to add more olefin.

**11.** The method of claim 5 wherein the molecular weight increase of said complex is proportional to monomer concentration divided by concentration of initiator concentration.

**12.** The method of claim 5 wherein the complex is made below its decomposition temperature and is mixed with the monomer to give a mixture above the decomposition temperature of the complex, the mixing being controlled to give a temperature wherein the rate of decomposition of the complex is such as to give a half life of 5 minutes to an hour such that the undecomposed complex effects sufficient polymerization of the monomer to achieve a desired molecular weight in from one to 30 minutes.

**13.** A complex consisting of an organic carboxylic acid or ester with a Lewis acid characterised in that the complex has a supernonnucleophilic counter anion and the complex is able to add at least one olefinic monomer to give a living polymensation system in which its molecular weight is increased to in excess of 1000.

**14.** The complex of claim 13 wherein the Lewis acid is selected from the class consisting of $BX_3$, $TiX_4$, $AlX_3$, $ZnX_2$, $FeX_3$; where X is a halogen.

**15.** The complex of claim 13 wherein the acid or ester is selected from the class consisting of acrylic, methacrylic and allylic.

**16.** The complex of claim 13 wherein the acid or ester is formic acid or a formate.

**17.** A method of polymerisation comprising producing a complex, of an organic carboxylic acid or ester with a Lewis acid, the complex having a supernonnucleophilic counter anion and the complex being able to add olefinic monomer to give a living polymensation system and increasing the molecular weight of said complex by adding olefinic monomer thereto characterised by:

forming a complex of said organic acid or ester with a Lewis acid by contacting said organic acid or ester with said Lewis acid at a temperature below the temperature at which said complex decomposes, mixing said complex prior to substantial decomposition with at least one olefin to effect a significant increase in molecular weight of said complex.

**18.** The method of claim 17 wherein the complex and olefin are fed simultaneously to a reactor and the temperature of mixture produced by their mixing is above the decomposition temperature of the complex.

**19.** The method of claim 17 wherein the polymerization rate is sufficient to essentially consume all the olefin in 1 to 30 minutes and the complex has a decomposition half life greater than time required to consume all the olefin.

**20.** The method of claim 19 wherein the molecular weight increase of the complex varies from 1,000 to in excess of a million.

**21.** The method of claim 17 wherein the complex adds different olefinic monomers to yield a copolymer, a ternary polymer, or a higher polymer.

**22.** The method of claim 21 wherein at least one monomer is an alpha-olefin and another is a diolefin.

**23.** The method of claim 22 wherein the alpha-olefin contains from 3 to 8 carbon atoms.

**24.** The method of claim 23 wherein the alpha-olefin is isobutylene and the diolefin is isoprene.

**25.** The method of claim 24 wherein the increase in molecular weight is at least sufficient to give the complex a molecular weight greater than 10,000 and the isoprene constitutes at least 2.13 mole percent of the polymer charge.

**26.** The method of claim 22 wherein the diolefin constitutes from 1 to 90 mole percent of the olefinic monomer.

**27.** The method of claim 26 wherein the diolefin is present in 2 to 10 mole percent and the molecular weight of the complex is in excess of ten thousand.

**28.** A method of polymerisation comprising producing a complex of an organic carboxylic acid or ester with a Lewis acid, the complex having a supernonnucleophilic counter anion and the complex being able to add olefinic monomers thereto to effect a carbocationic polymerization comprising:

forming a complex of said organic carboxylic acid or ester with a Lewis acid by contacting said organic carboxylic acid or ester with said Lewis acid at a temperature below the temperature at which said complex decomposes, contacting said complex prior to substantial decomposition with at least one olefin to effect a significant increase in molecular weight of said complex to greater than 1,000.

**29.** The method of claim 28 wherein the temperature of the complex is below its decomposition temperature and the olefin has a temperature sufficient to produce a mixture having a temperature above decomposition temperature of the complex upon mixing and maintaining said mixture at said temperature above the decomposition temperature of said complex but sufficiently low that the rate of decomposition of the complex is such that the polymerisation reaches the desired degree of completion.

**30.** The method of claim 29 wherein the complex and olefin are fed simultaneously to a reactor and the temperature of mixture produced by their mixing is above the decomposition temperature of the complex.

**31.** The method of claim 28 wherein the mixture temperature is 10° to less than 50°C.

**32.** The method of claim 28 wherein the polymerisation rate is sufficient to essentially consume all the olefin in 1 to 30 minutes and the complex has a decomposition half life greater than time required to consume all the olefin.

**33.** The method of claim 29 wherein the complex has a decomposition half life of 5 minutes to an hour at temperatures of 20°C to 30°C.

**34.** A composition characterised by having a structure selected from the class having the formulae of:

(a)

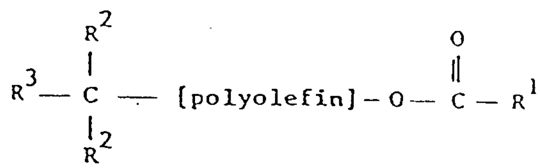

(b)

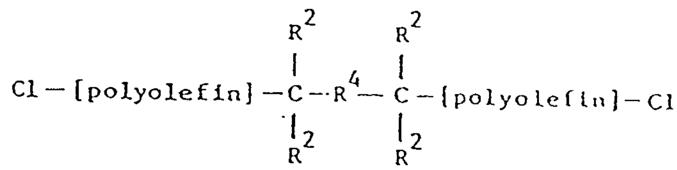

(c)

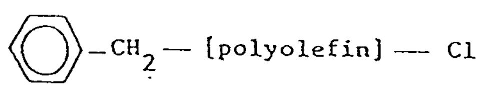

(d)

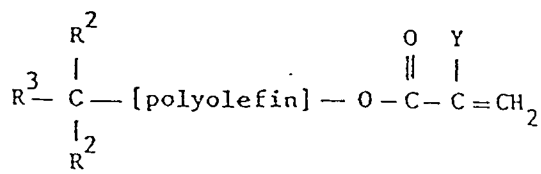

(e)

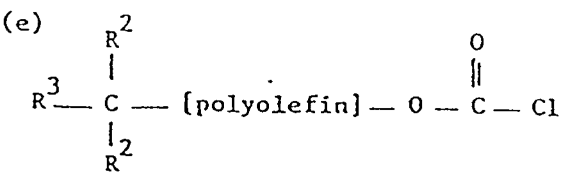

(f)

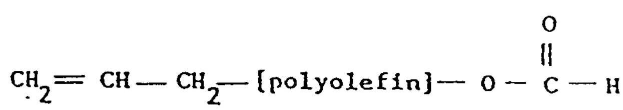

(g)

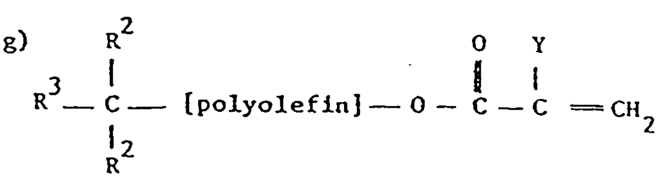

(h)

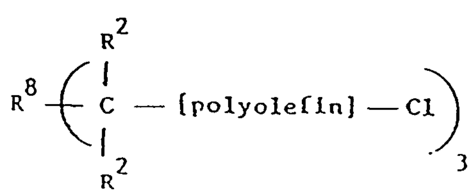

where $R^1$ $R^2$ and $R^3$ are hydrogen, halogen or an organic moiety of an organic acid;

$R^4$ is methylene or polymethylene, ethylenic, acetylenic, or related homologous groups;

$R^8$ is a trivalent organic moiety; and y is hydrogen or alkyl.

**35.** A composition according to claim 34 characterised in that $R^2$ and $R^3$ are the same as $R^1$.

**36.** A composition according to claim 34 wherein the polyolefin segment of the composition of the formula is formed from an olefin having from 2 to 20 carbon atoms.

**37.** A composition according to claim 34 wherein at least one part of the polyolefin segment of the formula is formed from a diolefin.

**38.** A composition according to claim 37 wherein the diolefin is a conjugated one.

**39.** A composition according to claim 36 wherein at least part of the polyolefin segment of the formula is derived from the polyisobutylene.

**40.** A composition according to claim 36 wherein at least part of the polyolefin segment of the formula is derived from isoprene.

**41.** A composition according to claim 36 wherein a major portion of the polyolefin segment is isobutylene and a minor portion of said segment is isoprene.

**42.** A composition according to claim 34 wherein the composition has a molecular weight in excess of one thousand.

## Patentansprüche

**1.** Ein Verfahren zur Herstellung eines Komplexes aus einer organischen Carbonsäure oder einem Carbonsäurester mit einer Lewissäure, dadurch gekennzeichnet, daß der Komplex ein extrem nicht-nukleophiles Gegenanion besitzt und der Komplex fähig ist, wenigstens ein olefinisches Monomer hinzuzufügen und diese Hinzufügung des Monomers fortzusetzen und das Molekulargewicht dieses Komplexes zu erhöhen, um ein lebendes Polymerisationssystem zu ergeben, welches die Einführung einer organischen Säure oder eines Esters und einer Lewissäure in ein System und das Vermischen, ohne Rücksicht auf die Sequenz, bei einer Temperatur unterhalb der Zersetzungstemperatur dieses Komplexes, entweder in Gegenwart oder Abwesenheit eines Lösungsmittels für diesen Komplex, umfaßt.

**2.** Verfahren nach Anspruch 1, worin ausreichend Olefinmonomer zugesetzt wurde, während die Temperatur unter der Zersetzungstemperatur des Komplexes gehalten wird, um dessen Molekulargewicht auf einen Bereich von zwischen 1.000 bis 100.000 Einheiten zu erhöhen.

**3.** Verfahren nach Anspruch 2, worin das zugesetzte olefinische Monomer eine Mischung aus einem $\alpha$-Olefin und einem Diolefin ist.

**4.** Verfahren nach Anspruch 1, worin die Lewissäure und die Carbonsäure oder deren Ester bei einer Temperatur von -10 °C oder niedriger in Kontakt gebracht werden, um den Komplex zu bilden.

**5.** Ein Verfahren zur Herstellung eines Komplexes aus einer organischen Carbonsäure oder einem Carbonsäureester mit einer Lewissäure, wobei der Komplex ein extrem nicht-nukleophiles Gegenanion besitzt, und wobei der Komplex fähig ist, olefin ische Monomere hinzuzufügen, um ein lebendes Polymerisationssystem zu ergeben, umfassend das Einführen einer organischen Carbonsäure oder eines Carbonsäureesters und einer Lewissäure in ein System und das Vermischen ohne Rücksicht auf die Sequenz bei einer Temperatur unter der Zersetzungstemperatur des Komplexes in Gegenwart oder Abwesenheit eines Lösungsmittels für den Komplex, wobei das System ausreichend Olefin, bezogen auf das $[M]_0/[I]_0$-Verhältnis, enthält, um dem Komplex ein Molekulargewicht von mehr als 1.000 zu geben, wobei $[M]_0$ und $[I]_0$ das Ausgangsmonomer bzw. die Starterkonzentration bedeuten.

**6.** Verfahren nach Anspruch 5, worin die Temperatur unter -10 °C liegt.

**7.** Verfahren nach Anspruch 5, worin die Lewissäure aus der Klasse ausgewählt ist, die aus $BCl_3$, $AlCl_3$, $TiCl_4$, $FeCl_3$, $ZnCl_2$ besteht.

**8.** Verfahren nach Anspruch 5, worin die Lewissäure Borchlorid ist.

**9.** Verfahren nach Anspruch 5, worin ausreichend olefinisches Monomer zugesetzt wurde, während die Temperatur unter der Zersetzungstemperatur des Komplexes gehalten wird, um dessen Molekulargewicht auf einen Bereich zu erhöhen, der über 1.000 bis über 100.000 liegt.

**10.** Verfahren nach Anspruch 5, worin das Olefin mit dem Komplex reagiert, um einen Polymerkomplex zu ergeben und um im wesentlichen das gesamte Olefin innerhalb von 1 bis 30 Minuten zu verbrauchen, aber noch die Fähigkeit besitzt, weiteres Olefin zu hinzuzufügen.

**11.** Verfahren nach Anspruch 5, worin die Molekulargewichtserhöhung des Komplexes proportional zur Monomerkonzentration dividiert durch die Konzentration der Starterkonzentration ist.

**12.** Verfahren nach Anspruch 5, worin der Komplex unterhalb seiner Zersetzungstemperatur hergestellt und mit dem Monomer vermischt wird, um eine Mischung über der Zersetzungstemperatur des Komplexes zu ergeben, wobei die Mischung derart geregelt ist, eine Temperatur zu ergeben, daß die Zersetzungsgeschwindigkeit des Komplexes eine Halbwertzeit von 5 Minuten bis 1 Stunde beträgt, so daß der unzersetzte Komplex eine ausreichende Polymerisierung des Monomers bewirkt, um innerhalb von 1 bis 30 Minuten ein gewünschtes Molekulargewicht zu erreichen.

**13.** Ein Komplex, bestehend aus einer organischen Carbonsäure oder einem Carbonsäureester mit einer Lewissäure, dadurch gekennzeichnet, daß der Komplex ein extrem nicht-nukleophiles Gegenanion besitzt und der Komplex fähig ist, wenigstens ein olefinisches Monomer hinzuzufügen, um ein lebendes Polymerisationssystem zu ergeben, in welchem sein Molekulargewicht über 1.000 erhöht wird.

**14.** Komplex nach Anspruch 13, worin die Lewissäure aus der Klasse ausgewählt ist, die aus $BX_3$, $TiX_4$, $AlX_3$, $ZnX_2$, $FeX_3$ besteht, worin X ein Halogenrest ist.

**15.** Komplex nach Anspruch 13, worin die Lewissäure aus der Klasse ausgewählt ist, die aus einem Acryl-, Methacryl- und Allylrest gebildet ist.

**16.** Komplex nach Anspruch 13, worin die Säure oder der Ester Ameisensäure oder ein Formiat davon ist.

**17.** Ein Polymerisationsverfahren, umfassend die Herstellung eines Komplexes aus einer organischen Carbonsäure oder einem Carbonsäureester mit einer Lewissäure, wobei der Komplex ein extrem nicht-nukleophiles Gegenanion besitzt und der Komplex fähig ist, ein olefinisches Monomer hinzuzufügen, um ein lebendes Polymerisationssystem zu ergeben und das Molekulargewicht des Komplexes durch Hinzufügung eines olefinischen Monomers zu erhöhen, gekennzeichnet durch:
Bildung eines Komplexes aus einer organischen Säure oder deren Ester mit einer Lewissäure, indem die organische Säure oder der Ester mit der Lewissäure bei einer Temperatur unterhalb der Temperatur, bei welcher sich der Komplex zersetz, in Kontakt gebracht wird,
Vermischen des Komplexes vor seiner wesentlichen Zersetzung mit wenigstens einem Olefin, um eine deutliche Erhöhung des Molekulargewichtes des Komplexes zu bewirken.

**18.** Verfahren nach Anspruch 17, worin der Komplex und das Olefin gleichzeitig in einen Reaktor eingespeist werden und die durch ihre Mischung erzeugte Mischungstemperatur über der Zersetzungstemperatur des Komplexes liegt.

**19.** Verfahren nach Anspruch 17, worin die Polymerisationsgeschwindigkeit ausreichend ist, um innerhalb von 1 bis 30 Minuten im wesentlichen das gesamte Olefin zu verbrauchen, und der Komplex eine Halbwertzeit für die Zersetzung aufweist, die größer ist, als die für den Verbrauch des gesamten Olefins erforderliche Zeit.

**20.** Verfahren nach Anspruch 19, worin die Molekulargewichtserhöhung des Komplexes von 1.000 bis über 1 Million variiert.

**21.** Verfahren nach Anspruch 17, worin der Komplex verschiedene olefinische Monomere hinzufügt, um ein Copolymer, ein ternäres Polymer oder ein höheres Polymer zu ergeben.

**22.** Verfahren nach Anspruch 21, worin wenigstens ein Monomer ein $\alpha$-Olefin und ein weiteres ein Diolefin ist.

**23.** Verfahren nach Anspruch 22, worin das $\alpha$-Olefin 3 bis 8 Kohlenstoffatome enthält.

**24.** Verfahren nach Anspruch 23, worin das $\alpha$-Olefin Isobuten und das Diolefin Isopren ist.

**25.** Verfahren nach Anspruch 24, worin die Molekulargewichtszunahme wenigstens ausreichend ist, um dem Komplex ein Molekulargewicht größer 10.000 zu verleihen, und das Isopren wenigstens 2,13 Mol% der Polymerbeschickung ausmacht.

**26.** Verfahren nach Anspruch 22, worin das Diolefin von 1 bis 90 Mol% des olefinischen Monomers ausmacht.

**27.** Verfahren nach Anspruch 26, worin das Diolefin zu 2 bis 10 Mol% anwesend ist und das Molekulargewicht das Komplexes über 10.000 liegt.

**28.** Ein Polymerisationsverfahren, umfassend die Herstellung eines Komplexes aus einer organischen carbonsäure oder einem Carbonsäureester mit einer Lewissäure, wobei der Komplex ein extrem nichtnukleophiles Gegenanion besitzt und der Komplex fähig ist, olefinische Monomere hinzuzufügen, um eine carbokationische Polymerisation zu bewirken, umfassend:
die Bildung eines Komplexes aus der organischen Carbonsäure oder dem Carbonsäureester mit einer Lewissäure, indem die organische Carbonsäure oder der Carbonsäureester mit der Lewissäure bei einer Temperatur unter der Temperatur, bei welcher sich der Komplex zersetzt, in Kontakt gebracht wird und indem der Komplex vor der wesentlichen Zersetzung mit wenigstens einem Olefin in Kontakt gebracht wird, um eine deutliche Erhöhung des Molekulargewichtes des Komplexes auf größer als 1.000 zu bewirken.

**29.** Verfahren nach Anspruch 28, worin die Temperatur des Komplexes unter seiner Zersetzungstemperatur liegt und das Olefin eine Temperatur besitzt, die ausreichend ist, um eine Mischung mit einer Temperatur über der der Zersetzungstemperatur des Komplexes beim Mischen und Halten der Mischung bei dieser Temperatur über der Zersetzungstemperatur des Komplexes, jedoch genügend niedrig, damit die Zersetzunggeschwindigkeit des Komplexes derart ist, daß die Polymerisation den erwünschten Vollständigkeitsgrad erreicht, zu ergeben.

**30.** Verfahren nach Anspruch 29, worin der Komplex und das Olefin gleichzeitig in einen Reaktor eingespeist werden und die durch ihre Mischung erzeugte Mischungstemperatur über der Zersetzungstemperatur des Komplexes liegt.

**31.** Verfahren nach Anspruch 28, worin die Mischungstemperatur 10° bis weniger als 50°C beträgt.

**32.** Verfahren nach Anspruch 28, worin die Polymerisationsgeschwindigkeit ausreichend ist, um im wesentlichen das gesamte Olefin in 1 bis 30 Minuten zu verbrauchen und der Komplex eine Halbwertzeit der Zersetzung besitzt, die größer ist, als die für den Verbrauch des gesamten Olefins erforderliche Zeit.

**33.** Verfahren nach Anspruch 29, worin der Komplex eine Halbwertzeit der Zersetzung von 5 Minuten bis 1 Stunde bei Temperaturen von 20°C bis 30°C besitzt.

**34.** Eine Zusammensetzung, gekennzeichnet durch eine Struktur, die aus der Klasse ausgewählt ist, welche die Formeln

(a)

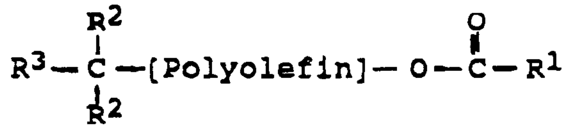

(b)

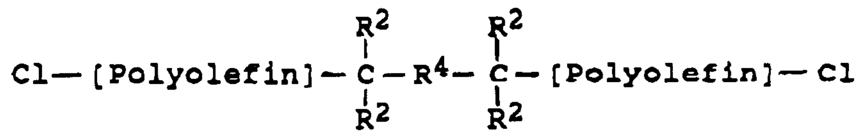

(c)

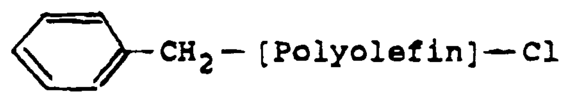

(d)

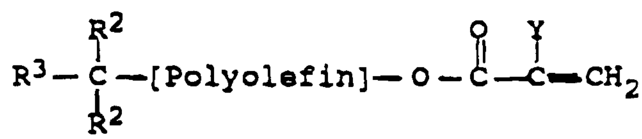

(e)

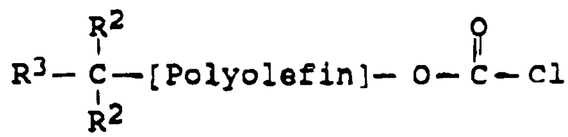

(f)

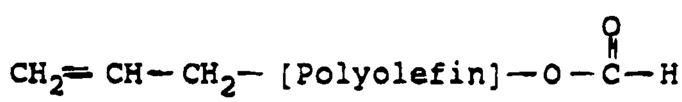

(g)

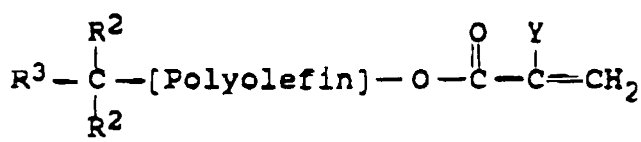

(h)

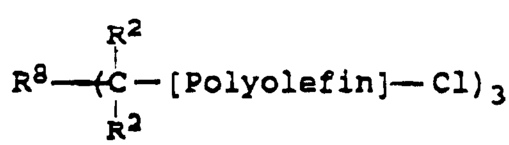

aufweist, worin
$R^1$, $R^2$ und $R^3$ Wasserstoff, Halogen oder ein organischer Anteil einer organischen Säure sind,

$R^4$ eine Methylen-, Polymethylen-, Ethylen-, Acetylengruppe oder verwandte homologe Gruppen bedeutet;
$R^8$ ein dreiwertiger organischer Anteil ist und y Wasserstoff oder Alkyl bedeutet.

**35.** Zusammensetzung nach Anspruch 34, dadurch gekennzeichnet, daß $R^2$ und $R^3$ die gleiche Bedeutung wie $R^1$ haben.

**36.** Zusammensetsung nach Anspruch 34, worin das Polyolefinsegment der Zusammensetzung der Formel aus einem Olefin mit 2 bis 20 Kohlenstoffatomen gebildet ist.

**37.** Zusammensetzung nach Anspruch 34, worin wenigstens ein Teil des Polyolefinsegmentes der Formel aus einem Diolefin gebildet ist.

**38.** Zusammmensetzung nach Anspruch 37, worin das Diolefin ein konjugiertes Diolefin ist.

**39.** Zusammensetzung nach Anspruch 36, worin wenigstens ein Teil des Polyolefinsegmentes der Formel aus Polyisobutylen abgeleitet ist.

**40.** Zusammensetzung nach Anspruch 36, worin wenigstens ein Teil des Polyolefinsegmentes der Formel aus Isopren abgeleitet ist.

**41.** Zusammensetzung nach Anspruch 36, worin ein größerer Teil des Polyolefinsegmentes Isobutylen und ein kleinerer Teil des Segmentes Isopren ist.

**42.** Zusammensetzung nach Anspruch 34, worin die Zusammensetzung ein Molekulargewicht von über 1.000 aufweist.

**Revendications**

**1.** Procédé pour préparer un complexe d'un acide ou d'un ester organique carboxylique avec un acide de Lewis, caractérisé en ce que le complexe possède un contre-anion super-non nucléophile, et le complexe est apte à ajouter au moins un monomère oléfinique et à continuer l'addition dudit monomère et à accroître le poids moléculaire dudit complexe pour obtenir un système de polymérisation vivant, comprenant l'introduction d'un acide organique ou d'un ester et d'un acide de Lewis dans un système et à effectuer le mélange sans tenir compte de l'ordre, à une température inférieure à la température de décomposition dudit complexe soit en présence, soit en l'absence d'un solvant pour ledit complexe.

**2.** Procédé selon la revendication 1, dans lequel une quantité suffisante d'un monomère oléfinique a été ajoutée tout en maintenant la température inférieure à la température de décomposition dudit complexe pour accroître son poids moléculaire pour qu'il se situe dans une gamme allant de 1000 à plus d'une centaine de milliers d'unités.

**3.** Procédé selon la revendication 2, selon lequel le monomère oléfinique ajouté est un mélange d'une alpha-oléfine et d'une dioléfine.

**4.** Procédé selon la revendication 1, selon lequel l'acide de Lewis et l'acide carboxylique ou son ester sont mis en contact à une température de -10 °C ou moins pour former ledit complexe.

**5.** Procédé pour produire un complexe d'un acide ou d'un ester organique carboxylique avec un acide de Lewis, selon lequel le complexe possède un contre-anion super-non nucléophile et selon lequel le complexe est apte à ajouter des monomères d'oléfine pour obtenir un système de polymérisation vivant, comprenant l'introduction d'un acide ou d'un ester organique carboxylique et d'un acide de Lewis dans un système et en effectuer le mélange sans tenir compte de l'ordre à une température inférieure à la température de décomposition dudit complexe en présence ou en l'absence d'un solvant pour ledit complexe; ledit système contenant une quantité suffisante d'oléfine associée au rapport $[M]_0/[I]_0$ de manière à conférer au complexe un poids moléculaire supérieur à 1000, $[M]_0$ et $[I]_0$ représentant respectivement la concentration du monomère initial et la concentration de l'initiateur.

6. Procédé selon la revendication 5, selon lequel la température est inférieure à moins 10 °C.

7. Procédé selon la revendication 5, selon lequel l'acide de Lewis est choisi dans la classe comprenant $BCl_3$, $AlCl_3$, $TiCl_4$, $FeCl_3$, $ZnCl_2$.

8. Procédé selon la revendication 5, selon lequel l'acide de Lewis est du chlorure de bore.

9. Procédé selon la revendication 5, selon lequel une quantité suffisante d'un monomère oléfinique a été ajoutée, tout en maintenant la température inférieure à la température de décomposition dudit complexe pour accroître son poids moléculaire pour qu'il se situe dans une gamme située entre une valeur supérieure à 1000 et une valeur supérieure à cent mille.

10. Procédé selon la revendication 5, selon lequel l'oléfine réagit avec le complexe de manière à fournir un complexe de polymère et consommer essentiellement la qualité de ladite oléfine en une durée de 1 à 30 minutes, tout en permettant encore l'adjonction d'une quantité supplémentaire d'oléfine.

11. Procédé selon la revendication 5, selon lequel l'accroissement du poids moléculaire dudit complexe est proportionnel à la concentration du monomère, divisée par la concentration de l'initiateur.

12. Procédé selon la revendication 5, selon lequel le complexe est formé à une température inférieure à sa température de décomposition et est mélangé au monomère de manière à fournir un mélange au-dessus de la température de décomposition du complexe, le mélange étant commandé de manière à fournir une température à laquelle la vitesse de décomposition du complexe est telle qu'on obtient une durée de demi-vie comprise entre 5 minutes et une heure de sorte que le complexe non décomposé provoque une polymérisation suffisante du monomère pour permettre l'obtention d'un poids moléculaire désiré entre une et 30 minutes.

13. Complexe constitué par un acide ou un ester organique carboxylique avec un acide de Lewis, caractérisé en ce que le complexe possède un contre-anion super-non nucléophile et que le complexe permet d'ajouter au moins un monomère oléfinique pour obtenir un système de polymérisation vivant, dans lequel son poids moléculaire est accru à une valeur supérieure à 1000.

14. Complexe selon la revendication 13, dans lequel l'acide de Lewis est choisi dans la classe comprenant $BX_3$, $TiX_4$, $AlX_3$, $ZnX_2$, $FeX_3$, dans lequel X est un halogène.

15. Complexe selon la revendication 13, dans lequel l'acide ou l'ester est choisi dans la classe comprenant les acides ou les esters acryliques, méthacryliques et allyliques.

16. Complexe selon la revendication 13, dans lequel l'acide ou l'ester est de l'acide formique ou un formate.

17. Procédé de polymérisation consistant à produire un complexe, d'un acide ou d'un ester organique carboxylique avec un acide de Lewis, le complexe possédant un contre-anion super-non nucléophile et le complexe étant apte à ajouter un monomère oléofinique pour fournir un système de polymérisation, et accroître le poids moléculaire dudit complexe en lui ajoutant un monomère oléfinique, caractérisé par :

la formation d'un complexe dudit acide ou dudit ester organique et d'un acide de Lewis par mise en contact dudit acide organique ou dudit ester avec ledit acide de Lewis à une température inférieure à la température à laquelle ledit complexe se décompose, le mélange dudit complexe avant une décomposition substantielle liée à au moins une oléfine pour obtenir un accroissement important du poids moléculaire dudit complexe.

18. Procédé selon la revendication 17, selon lequel le complexe et l'oléfine sont envoyés simultanément à un réacteur et la température de mélange produite par leur mélange est supérieure à la température de décomposition du complexe.

19. Procédé selon la revendication 17, selon lequel la vitesse de polymérisation est suffisante pour consommer pour l'essentiel la totalité de l'oléfine en 1 à 30 minutes, et le complexe possède une

durée de demi-vie de décomposition supérieure à la durée nécessaire pour consommer la totalité de l'oléfine.

**20.** Procédé selon la revendication 19, selon lequel l'augmentation du poids moléculaire du complexe varie entre 1000 et plus d'un million.

**21.** Procédé selon la revendication 17, selon lequel le complexe ajoute différents monomères oléfiniques pour former un copolymère, un polymère ternaire ou un polymère de rang supérieur.

**22.** Procédé selon la revendication 21, selon lequel au moins un monomère est une alpha-oléfine et un autre est une dioléfine.

**23.** Procédé selon la revendication 22, selon lequel l'alpha-oléfine contient 3 à 8 atomes de carbone.

**24.** Procédé selon la revendication 23, selon lequel l'alpha-oléfine est de l'isobutylène et la dioléfine est de l'isoprène.

**25.** Procédé selon la revendication 24, selon lequel l'accroissement du poids moléculaire est au moins suffisant pour conférer au complexe un poids moléculaire supérieur à 10 000, et l'isoprène constitue au moins 2,3 pour cent en moles de la charge en polymère.

**26.** Procédé selon la revendication 22, selon lequel la dioléfine constitue 1 à 90 pour cent en moles du monomère oléfinique.

**27.** Procédé selon la revendication 26, selon lequel la dioléfine est présente pour 2 à 10 pour cent en moles, et le poids moléculaire du complexe dépasse dix mille.

**28.** Procédé de polymérisation consistant à produire un complexe d'un acide ou d'un ester organique carboxylique avec un acide de Lewis, le complexe possédant un contre-anion super-non nucléophile et le complexe étant apte à lui ajouter des monomères oléfiniques pour exécuter une polymérisation carbocationique, comprenant :

la formation d'un complexe dudit acide ou dudit ester organique carboxylique avec un acide de Lewis par mise en contact dudit acide ou dudit ester organique carboxylique avec ledit acide de Lewis à une température inférieure à la température à laquelle ledit complexe se décompose, la mise en contact dudit complexe avant sa décomposition substantielle, avec au moins une oléfine pour obtenir un accroissement important du poids moléculaire dudit complexe à une valeur supérieure à 1000.

**29.** Procédé selon la revendication 28, selon lequel la température du complexe est inférieure à sa température de décomposition et l'oléfine possède une température suffisante pour l'obtention d'un mélange possédant une température supérieure à la température de décomposition du complexe lors du mélange et du maintien dudit complexe à ladite température supérieure à la température de décomposition dudit complexe, mais suffisamment faible pour que la vitesse de décomposition du complexe soit telle que la polymérisation atteint le degré désiré d'achèvement.

**30.** Procédé selon la revendication 29, selon lequel le complexe et l'oléfine sont envoyés simultanément à un réacteur et la température de leur mélange est supérieure à la température de décomposition du complexe.

**31.** Procédé selon la revendication 28, caractérisé en ce que la température de mélange est comprise entre 10° et moins de 50°C.

**32.** Procédé selon la revendication 28, selon lequel la vitesse de polymérisation est suffisante pour consommer essentiellement la totalité de l'oléfine en 1 à 30 minutes, et que le complexe possède une durée de demi-vie de décomposition inférieure à la durée nécessaire pour consommer la totalité de l'oléfine.

**33.** Procédé selon la revendication 29, selon lequel le complexe possède une durée de demi-vie de décomposition comprise entre 5 minutes et une heure à des températures de 20°C à 30°C.

**34.** Composition caractérisée en ce qu'elle possède une structure sélectionnée dans la classe incluant les formules de :

(a)

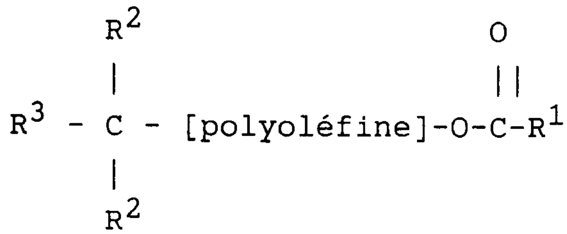

(b)

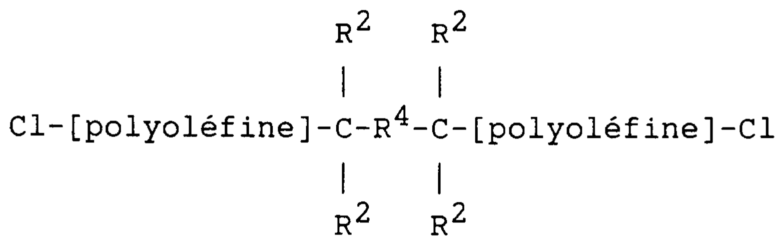

(c)

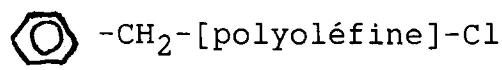

(d)

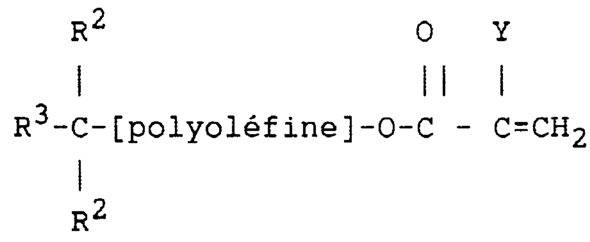

(e)

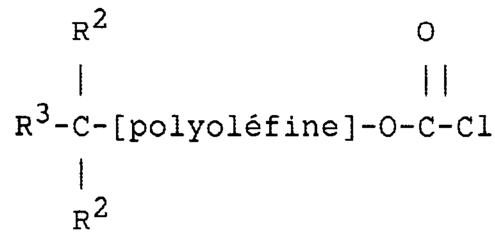

(f)

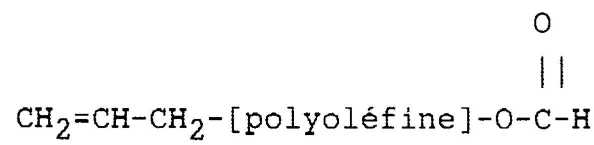

(g)

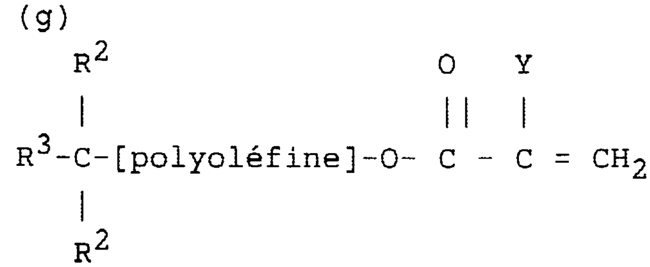

(h)

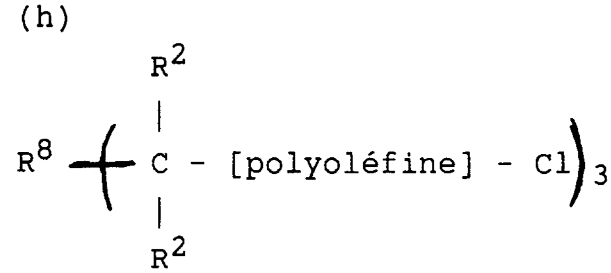

$R^1$, $R^2$ et $R^3$ représentent un hydrogène, un halogène ou une partie organique d'un acide organique;
$R^4$ représente un radical méthylène ou polyméthylène, éthylénique, acétylénique, ou des groupes homologues associés;
$R^8$ est une partie organique trivalente; et y est un hydrogène ou un alkyle.

**35.** Composition selon la revendication 34, caractérisée en ce que $R^2$ et $R^3$ sont identiques à $R^1$.

**36.** Composition selon la revendication 34, dans laquelle le segment de polyoléfine de la composition de la formule est formé par une oléfine possédant de 2 à 20 atomes de carbone.

**37.** Composition selon la revendication 34, dans laquelle au moins une partie du segment de polyoléfine de cette formule est formée par une dioléfine.

**38.** Composition selon la revendication 37, dans laquelle la dioléfine est une dioléfine conjuguée.

**39.** Composition selon la revendication 36, dans laquelle au moins une partie du segment de polyoléfine de la formule est dérivée du polyisobutylène.

**40.** Composition selon la revendication 36, dans laquelle au moins une partie du segment de polyoléfine de la formule est dérivée de l'isoprène.

**41.** Composition selon la revendication 36, dans laquelle une majeure partie du segment de polyoléfine est de l'isobutylène et une partie secondaire dudit segment est de l'isoprène.

**42.** Composition selon la revendication 34, dans laquelle la composition possède un poids moléculaire dépassant un millier.

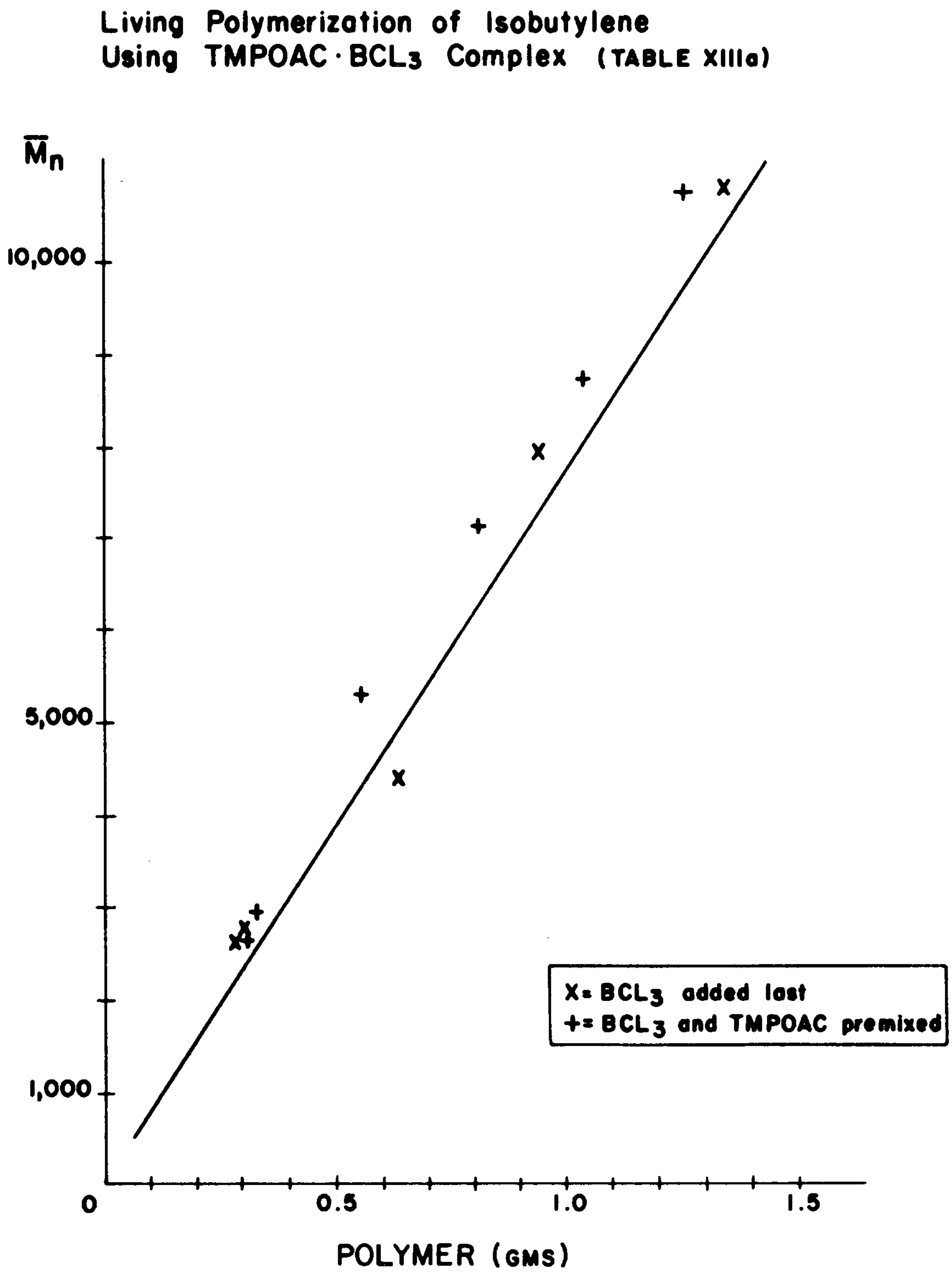
Living Polymerization of Isobutylene
Using TMPOAC·BCL3 Complex (TABLE XIIIa)
$\bar{M}_n$
10,000
5,000
1,000
0
0.5
1.0
1.5
POLYMER (GMS)
X= BCL3 added last
+= BCL3 and TMPOAC premixed

FIG.-1

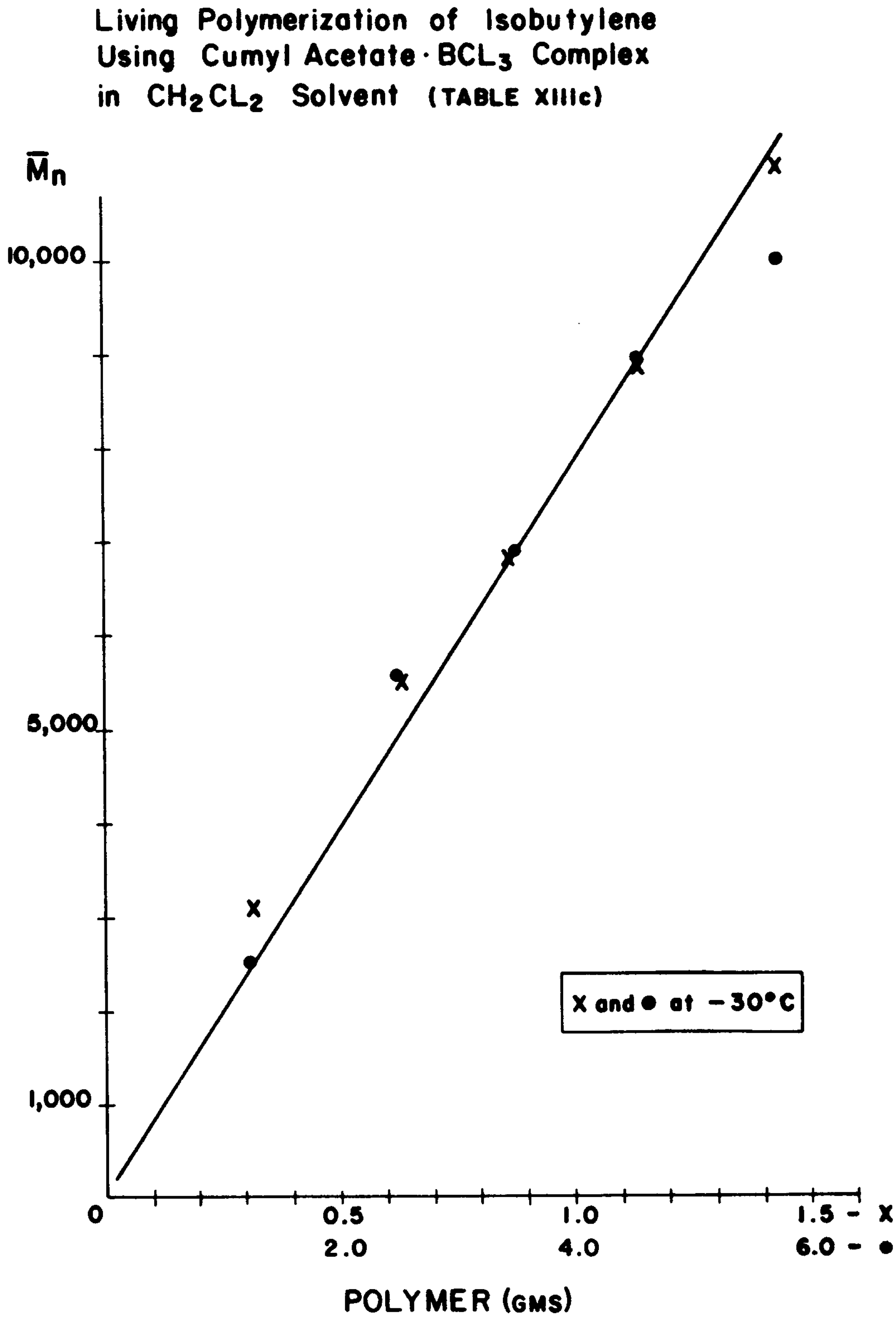
Living Polymerization of Isobutylene
Using Cumyl Acetate·BCL3 Complex
in CH2CL2 Solvent (TABLE XIIIc)
Mn
10,000
5,000
1,000
0
0.5
1.0
1.5 - X
2.0
4.0
6.0 - ●
POLYMER (GMS)
X and ● at -30°C

FIG.-2

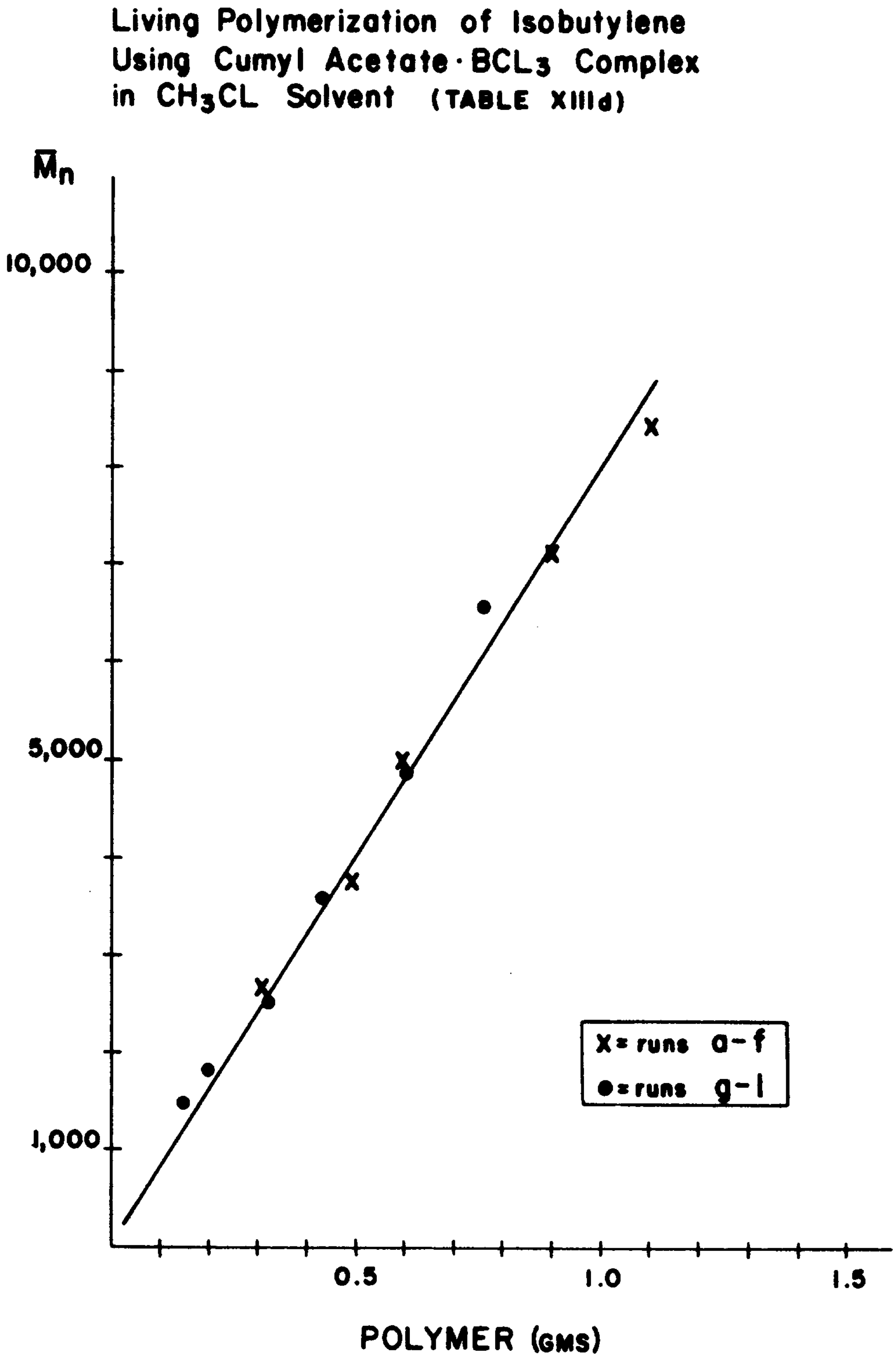
Living Polymerization of Isobutylene
Using Cumyl Acetate·BCL3 Complex
in CH3CL Solvent (TABLE XIIId)
M̄n
10,000
5,000
1,000
0.5
1.0
1.5
POLYMER (GMS)
X = runs a-f
● = runs g-l

FIG.-3

Living Polymerization of Isobutylene
Using Dicumyl Acetate · $BCL_3$ Complex
(TABLE XIIIh)

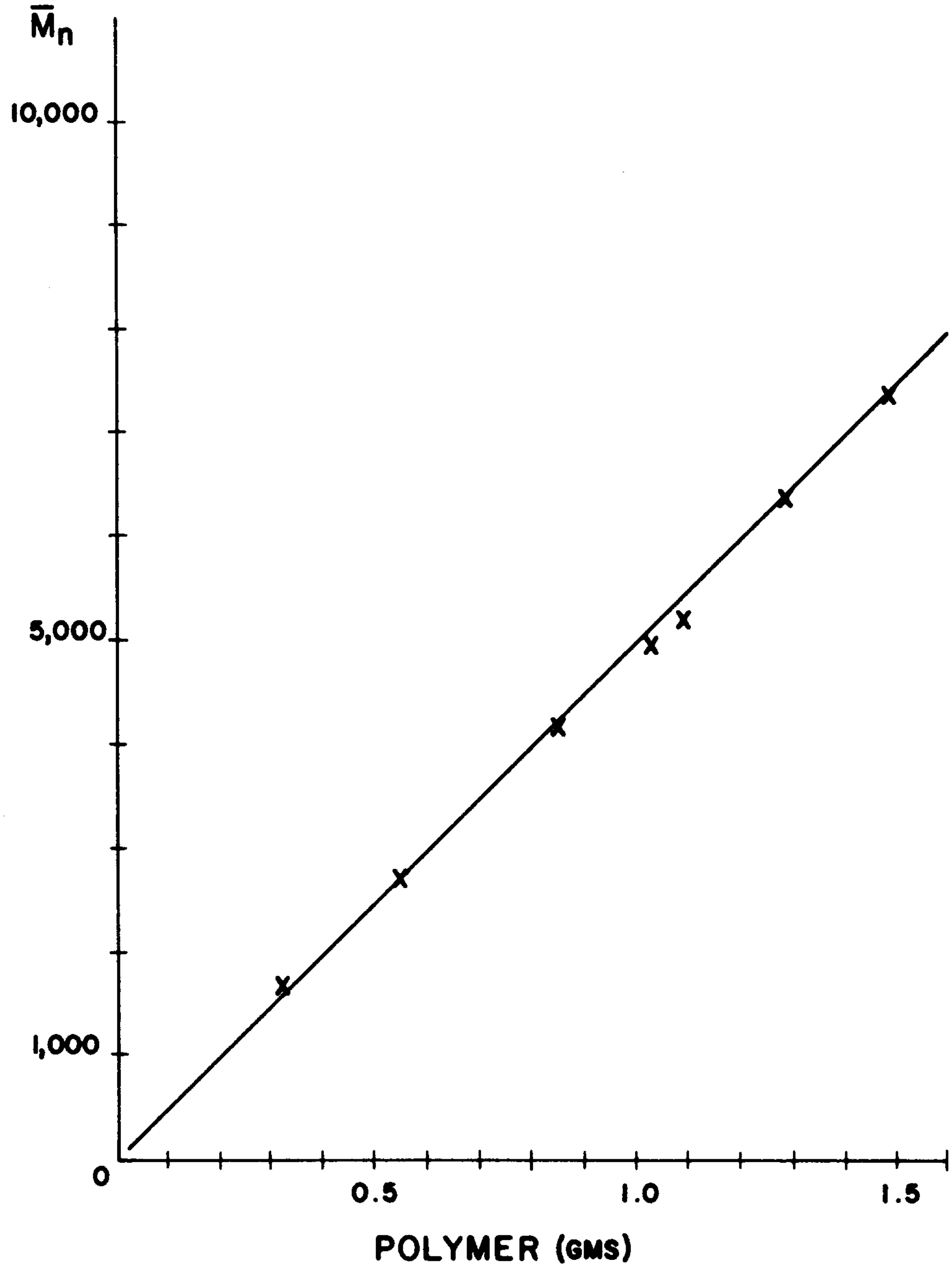


FIG.- 4

Living Copolymerization of Isobutylene/ Isoprene Charges Using Cumyl Acetate · $BCL_3$ Complex
(TABLE XVb)

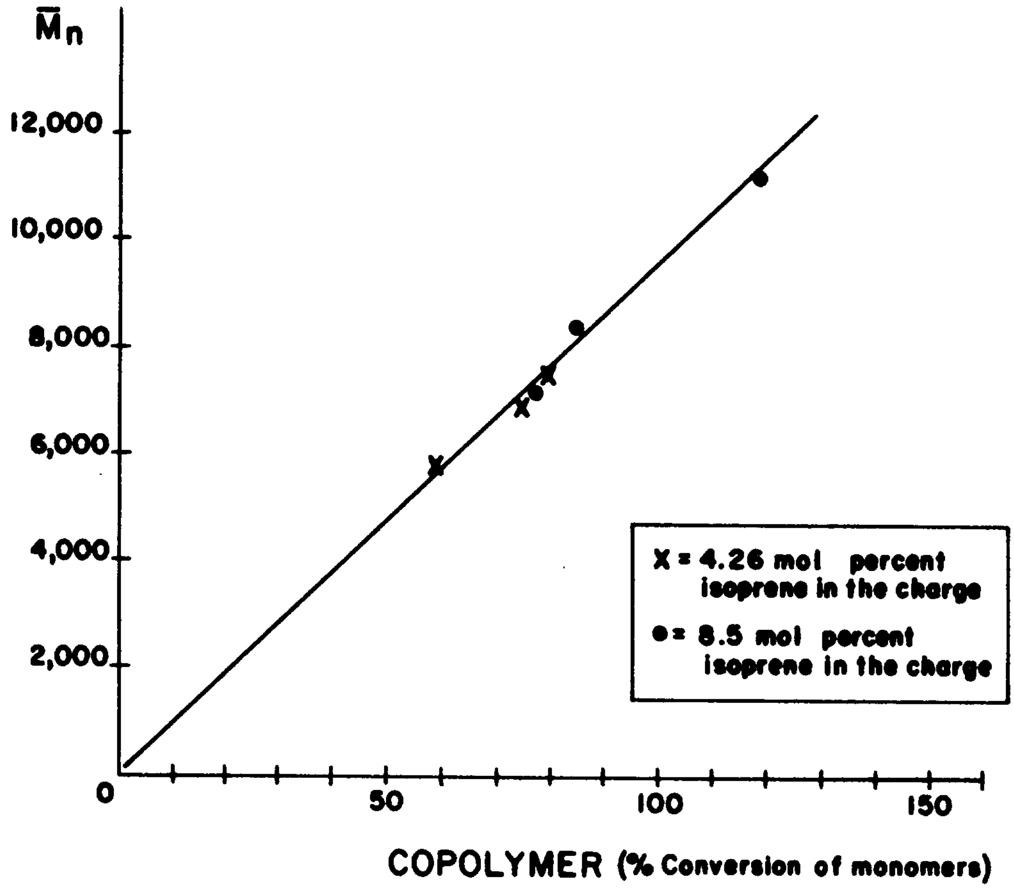


FIG.-5